# EUROPEAN PATENT APPLICATION

(11) **EP 4 578 739 A1**
(43) Date of publication of application: **02.07.2025**
(21) Application number: 23871408.3
(22) Date of filing: 24.07.2023
(51) Int. Cl.: B60R 11/02, H04R 1/02, H04R 3/00

(54) **ACOUSTIC DEVICE, PLAYBACK METHOD, AND PROGRAM**

(30) Priority: 26.09.2022 JP 2022152471
(71) Applicant: Panasonic Intellectual Property Management Co., Ltd., Kadoma-shi, Osaka 571-0057 (JP)
(72) Inventor: KANO, Hiroyuki, Kadoma-shi, Osaka 571-0057 (JP); NAKAHASHI, Kota, Kadoma-shi, Osaka 571-0057 (JP)
(74) Representative: Grünecker Patent- und Rechtsanwälte PartG mbB
(86) International application number: PCT/JP2023/027068
(87) International publication number: WO 2024/070165

(57) **Abstract**

This acoustic device adjusts the playback sound of a speaker so the playback sound is listened to in a predetermined playback area. A background-noise signal indicating the ambient sound around a microphone is generated based on a playback signal output from a sound source of the playback sound, a detection sound signal indicating a detection sound from the microphone installed near a speaker, and the transfer characteristics of a voice signal transmitted from the speaker to the microphone. A leakage sound signal indicating the playback sound listened to at a representative point located outside the playback area is generated based on the playback signal and the transfer characteristics of a voice signal transmitted from the speaker to the representative point. The level of the playback signal is adjusted so that the leakage sound signal level is smaller than the background-noise signal level.

## Description

### Technical Field

The present invention relates to a technique for performing audio playback only in the vicinity of a listener.

### Background Art

In recent years, a directional speaker is used as an acoustic device that plays back music, voice, or the like only in a specific place. The directional speaker is constituted by a array speaker in which a large number of speakers are installed in a line as described in Patent Literature 1, for example. The directional speaker adjusts, for each frequency, the level of a signal played back by each speaker so that playback sound can be listened to only in a preset playback area.

However, in reality, the playback sound leaks to a non-playback area outside the playback area, and therefore it is difficult to set the level of the playback sound to "0" in the non-playback area. Therefore, Patent Literature 1 describes performing an adjustment of narrowing the width of the playback area when the sound pressure level of playback sound leaking to the non-playback area exceeds the surrounding noise level. It is described that this suppresses the sound pressure level of playback sound leaking to the non-playback area to be smaller than the surrounding noise level.

However, in the technique of Patent Literature 1, the width of the playback area is adjusted to be narrow when the sound pressure level of playback sound leaking to the outside of the playback area is suppressed, and thus there is a possibility that a person present at the end of the playback area before the adjustment cannot normally listen to the playback sound.

### Citation List

### Patent Literature

Patent Literature 1: JP 2017-50847 A

### Summary of Invention

The present disclosure has been made to solve the above problem, and an object of the present disclosure is to provide a technique that enables playback sound to be normally listened to in a playback area and playback sound leaking to the outside of the playback area to be avoided from being perceived.

### Problems to be Solved by the Invention

An acoustic device according to one aspect of the present disclosure is an acoustic device that adjusts playback sound played back by a speaker so that the playback sound is listened to in a predetermined playback area, the acoustic device including: a first generation unit that generates a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone; a second generation unit that generates a leakage sound signal indicating the playback sound listened to at a representative point located outside the playback area, based on the playback signal and a second characteristic that is a transfer characteristic of a voice signal from the speaker to the representative point; and an adjustment unit that adjusts a level of the playback signal so that a level of the leakage sound signal is smaller than a level of the background-noise signal.

### Brief Description of Drawings

FIG. 1A is a top view illustrating an example of a configuration of an acoustic system according to a first embodiment.
FIG. 1B is a front view illustrating an example of the configuration of the acoustic system according to the first embodiment.
FIG. 2 is a view illustrating an example of frequency characteristics of playback sound and background noise in a non-playback area.
FIG. 3 is a view illustrating an example of frequency characteristics of playback sound and background noise in the non-playback area.
FIG. 4 is a view illustrating an example of frequency characteristics of playback sound and background noise in a playback area.
FIG. 5 is a view illustrating an example of frequency characteristics of playback sound and background noise in the playback area.
FIG. 6 is a view illustrating an example of a detailed configuration of the acoustic system according to the first embodiment.
FIG. 7 is a flowchart showing an example of signal processing performed in the acoustic device.
FIG. 8 is a view illustrating an example of a transfer characteristic from a speaker to a microphone and a transfer characteristic from the speaker to a representative point of a non-playback area.
FIG. 9A is a view illustrating an example of a difference characteristic between two transfer characteristics and an approximation characteristic thereof.
FIG. 9B is a view illustrating an example of a difference characteristic between two transfer characteristics and an approximation characteristic thereof.
FIG. 10 is a view illustrating an example of a configuration of an acoustic system according to a modification of the first embodiment.
FIG. 11 is a view illustrating an example of a configuration of an acoustic system according to another modification of the first embodiment.
FIG. 12 is a view illustrating an example of a detailed configuration of an acoustic system according to another modification of the first embodiment.
FIG. 13 is a view illustrating an example of a configuration of an acoustic system according to a second embodiment.
FIG. 14A is a view illustrating an example of installation locations of a plurality of speakers and a plurality of microphones included in the acoustic system according to the second embodiment.
FIG. 14B is a view illustrating an example of installation locations of the plurality of speakers and the plurality of microphones included in the acoustic system according to the second embodiment.
FIG. 15A is a front view illustrating another example of installation locations of the plurality of speakers and the plurality of microphones included in the acoustic system according to the second embodiment.
FIG. 15B is a top view illustrating another example of installation locations of the plurality of speakers and the plurality of microphones included in the acoustic system according to the second embodiment.
FIG. 16 is a view illustrating an example of a detailed configuration of the acoustic system according to the second embodiment.
FIG. 17 is a view illustrating an example of a case where the acoustic system according to the second embodiment is applied to three seats.
FIG. 18 is a view illustrating an example of a configuration of an area playback system according to a known technique.

### Description of Embodiments

### (Background of Present Disclosure)

As described above, the known directional speaker is constituted by a array speaker in which a large number of speakers are installed in a line as described in Patent Literature 1, for example. The known directional speaker adjusts, for each frequency, the level of a signal played back by each speaker so that playback sound can be listened to only in a preset playback area.

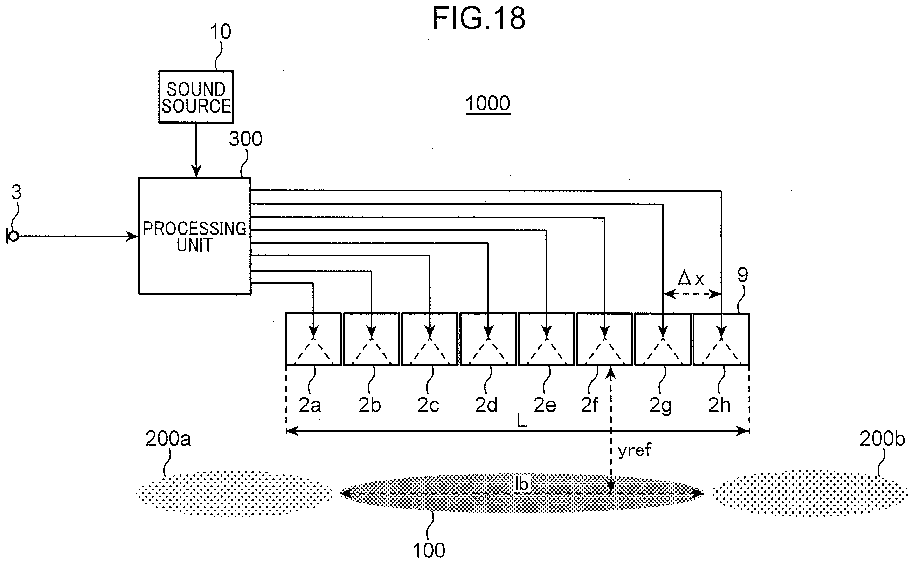

FIG. 18 illustrates an example of the configuration of an area playback system 1000 according to the known technique. Specifically, as illustrated in FIG. 18, in the area playback system 1000, a processing unit 300 performs predetermined signal processing on an audio signal input from a sound source 10, and outputs the audio signal after the signal processing to a array speaker 9.

In the signal processing by the processing unit 300, the audio signal input from the sound source 10 is convolved with a control filter for implementing area playback under playback conditions designated by a user. The control filter is derived using a predetermined expression (Expression (7) in Patent Literature 1) in accordance with the playback conditions. The playback conditions include a length L of the array speaker 9, an arrangement interval Δx between each of speakers 2a to 2h, the number of the speakers 2a to 2h included in the array speaker 9, a distance yref from the array speaker 9 to a playback area 100, and a width lb of the playback area 100.

The array speaker 9 plays back an audio signal after signal processing by the processing unit 300. Due to this, playback sound indicated by the audio signal can be clearly listened to in the playback area 100. However, in reality, the playback sound leaks to non-playback areas 200a and 200b located outside the playback area 100. Therefore, it is difficult to set the level of the playback sound to "0" in the non-playback areas 200a and 200b. However, if playback sound leaking to the non-playback areas 200a and 200b (hereinafter, leakage sound) is less than the surrounding noise level, the leakage sound is lost in the surrounding noise and cannot be listened to.

On the other hand, in a case where the surrounding noise level decreases or the level of the playback sound is set to be large during playback of the playback sound, there is a possibility that leakage sound is listened to in the non-playback areas 200a and 200b. That is, since the levels of the surrounding noise and the playback sound can always fluctuate, when the level of the playback sound becomes relatively larger than the surrounding noise level, there is a possibility that the leakage sound is listened to in the non-playback areas 200a and 200b.

Therefore, in the technique of Patent Literature 1, a microphone 3 detects the surrounding noise level, and when the level of the leakage sound in the non-playback areas 200a and 200b exceeds the level of the surrounding background noise, the width lb of the playback area 100 is adjusted to be narrowed. Due to this, the level of the leakage sound is suppressed to be smaller than the level of the background noise, and even when the level of the background noise or the playback sound fluctuates, the leakage sound is not listened to in the non-playback areas 200a and 200b.

However, in the technique of Patent Literature 1, in the case of suppressing the playback sound leaking to the non-playback areas 200a and 200b, the width lb of the playback area 100 is adjusted to be narrow. For this reason, there is a possibility that a person present at the end of the playback area 100 before the adjustment cannot normally listen to the playback sound.

In the technique of Patent Literature 1, it is not considered that sounds of a plurality of sound sources are individually listened to in a plurality of playback areas by using the plurality of sound sources.

For example, it is assumed that a plurality of passenger seats provided on a train, an airplane, and the like, and a plurality of adjacent seats such as a driver seat and a passenger seat of an automobile are each set as a playback area, and sounds of sound sources for the respective seats are individually played back by a array speaker installed in each of the seats. In this case, it is necessary to suppress leakage sound between a plurality of adjacent seats so that the sound played back at each seat is not perceived in the adjacent seat. During playback of playback sound, noise such as traveling sound and flight sound and playback sound at each seat can always fluctuate, and therefore suppression control of leakage sound in accordance with these fluctuations is also necessary.

However, Patent Literature 1 does not describe such suppression control of leakage sound. Even if the suppression technique of leakage sound of Patent Literature 1 described above is adopted, the width of the playback area is adjusted to be narrow, and the range in which the playback sound can be normally listened to in each seat is narrowed. For this reason, there is a possibility that a seated person cannot normally listen to playback sound.

Since the array speaker 9 is configured by arranging the N speakers 2a to 2h in a line, it is difficult to downsize the array speaker 9. For this reason, it is difficult to install the array speaker 9 in each of a plurality of adjacent seats provided in a train, an aircraft, an automobile, and the like.

Therefore, the present inventor has intensively studied a technique that enables playback sound to be normally listened to in a playback area and playback sound leaking to the outside of the playback area to be avoided from being perceived, and has arrived at each aspect of the present disclosure described below.
(1) An acoustic device according to one aspect of the present disclosure is an acoustic device that adjusts playback sound played back by a speaker so that the playback sound is listened to in a predetermined playback area, the acoustic device including: a first generation unit that generates a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone; a second generation unit that generates a leakage sound signal indicating the playback sound listened to at a representative point located outside the playback area, based on the playback signal and a second characteristic that is a transfer characteristic of a voice signal from the speaker to the representative point; and an adjustment unit that adjusts a level of the playback signal so that a level of the leakage sound signal is smaller than a level of the background-noise signal.

In the present configuration, the background-noise signal indicating the ambient sound around the microphone and the leakage sound signal indicating the playback sound listened to at the representative point located outside the playback area are generated, and the level of the playback signal is adjusted so that the level of the leakage sound signal is smaller than the level of the background-noise signal.

As described above, the present configuration adjusts the level of the playback signal by comparing the level of the leakage sound signal indicating not the playback sound having a great level detected by the microphone but the playback sound listened to at the representative point located outside the playback area with the level of the background-noise signal. Therefore, the level of the playback signal can be appropriately adjusted without being excessively adjusted. Due to this, the present configuration can cause the playback sound to be normally listened to in the playback area. Moreover, the present configuration can also avoid the playback sound leaking to the outside of the playback area from being perceived, by making the level of the playback sound listened to at the representative point indicated by the leakage sound signal smaller than the level of the ambient sound around the microphone indicated by the background-noise signal.

(2) In the acoustic device according to (1), the adjustment unit may calculate a difference level that is a difference between a level of a target frequency component, which is a frequency component greater in level than the background-noise signal in the leakage sound signal, and a level of a frequency component corresponding to the target frequency component in the background-noise signal, and attenuate, by equal to or greater than the difference level, a level of a frequency component corresponding to the target frequency component in the playback signal.

According to the present configuration, it is possible to appropriately suppress only a frequency component greater in level than the ambient sound around the microphone in the playback sound leaking to the outside of the playback area.

(3) In the acoustic device according to (1) or (2), the first generation unit may generate a playback sound signal indicating the playback sound listened to at an installation location of the microphone based on the playback signal and the first characteristic, and generate, as the background-noise signal, a signal in which the playback sound signal is subtracted from the detection sound signal, and the second generation unit may generate the leakage sound signal based on the playback sound signal and an approximation characteristic approximating a difference characteristic between the first characteristic and the second characteristic.

According to the present configuration, the leakage sound signal is generated based on the playback sound signal generated by the first generation unit and the approximation characteristic approximating the difference characteristic between the first characteristic and the second characteristic. Therefore, the present configuration can reduce the scale of the configuration and the calculation amount necessary for generation of the leakage sound signal as compared with the case of generating the leakage sound signal based on the playback signal and the second characteristic.

(4) In the acoustic device according to (3), the approximation characteristic may indicate that a level of each of a plurality of frequency components in a voice signal is constant.

According to the present configuration, since the approximation characteristic indicates that the level of each of the plurality of frequency components in the voice signal is constant, the leakage sound signal can be easily generated only by uniformly changing, by a certain amount, the levels of all frequency components of the playback sound signal.

(5) In the acoustic device according to (3), the approximation characteristic may indicate that a level of a frequency component lower than a predetermined reference frequency component in a voice signal is a first level that is constant, and a level of a frequency component higher than the reference frequency component in a voice signal is a second level that is constant and different from the first level.

In the present configuration, the approximation characteristic indicates that the level of the frequency component lower than the reference frequency component in the voice signal and the level of the frequency component higher than the reference frequency component are different constant levels. Therefore, according to the present configuration, it is possible to easily generate the leakage sound signal only by uniformly changing, by a certain amount, the level of the frequency component lower than the reference frequency component in the playback sound signal and uniformly changing, by a certain amount, the level of the frequency component higher than the reference frequency component in the playback sound signal.

(6) An acoustic device according to another aspect of the present disclosure is an acoustic device that adjusts a first playback sound played back by a first speaker and a second playback sound played back by a second speaker so that the first playback sound is listened to in a predetermined first playback area and the second playback sound is listened to in a predetermined second playback area, in which the first speaker is installed in a first seat, the second speaker is installed in a second seat in proximity to the first seat, and the acoustic device includes a first generation unit that generates a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone, and generates a second background-noise signal indicating ambient sound around a second microphone installed in proximity to the second speaker, based on a second playback signal output from a sound source of the second playback sound, a second detection sound signal indicating a detection sound detected by the second microphone, and a second transfer characteristic that is a transfer characteristic of a voice signal from the second speaker to the second microphone, a second generation unit that generates a first leakage sound signal indicating the first playback sound listened to at a first representative point located in the second playback area, based on the first playback signal and a third transfer characteristic that is a transfer characteristic of a voice signal from the first speaker to a first representative point, and generates a second leakage sound signal indicating the second playback sound listened to at a second representative point located in the first playback area, based on the second playback signal and a fourth transfer characteristic that is a transfer characteristic of a voice signal from the second speaker to the second representative point, and an adjustment unit that adjusts a level of the first playback signal so that a level of the first leakage sound signal is smaller than a level of the first background-noise signal, and adjusts a level of the second playback signal so that a level of the second leakage sound signal is smaller than a level of the second background-noise signal.

In the present configuration, the first background-noise signal indicating the ambient sound around the first microphone and the first leakage sound signal indicating the first playback sound listened to at the first representative point located in the second playback area are generated, and the level of the first playback signal is adjusted so that the level of the first leakage sound signal is smaller than the level of the first background-noise signal.

As described above, the present configuration adjusts the level of the first playback signal by comparing the level of the first leakage sound signal indicating not the first playback sound having a great level detected by the first microphone but the first playback sound listened to at the representative point located in the second playback area with the level of the first background-noise signal. Therefore, the level of the first playback signal can be appropriately adjusted without being excessively adjusted. Due to this, with the present configuration, the first playback sound played back by the first speaker installed in the first seat can be normally listened to in the first playback area. Moreover, the present configuration can also avoid the first playback sound played back at the first seat from being perceived in the second playback area, by making the level of the first playback sound listened to at the representative point of the second playback area indicated by the first leakage sound signal smaller than the level of the ambient sound around the first microphone indicated by the first background-noise signal.

Similarly to this, the present configuration can cause the second playback sound played back by the second speaker installed in the second seat to be normally listened to in the second playback area. The present configuration can also avoid the second playback sound played back at the second seat from being perceived in the first playback area.

(7) In the acoustic device according to (6), the adjustment unit may calculate a first difference level that is a difference between a level of a first frequency component, which is a frequency component greater in level than the first background-noise signal in the first leakage sound signal, and a level of a frequency component corresponding to the first frequency component in the first background-noise signal, and attenuate, by equal to or greater than the first difference level, a level of a frequency component corresponding to the first frequency component in the first playback signal, and calculate a second difference level that is a difference between a level of a second frequency component, which is a frequency component greater in level than the second background-noise signal in the second leakage sound signal, and a level of a frequency component corresponding to the second frequency component in the second background-noise signal, and attenuate, by equal to or greater than the second difference level, a level of a frequency component corresponding to the second frequency component in the second playback signal.

According to the present configuration, it is possible to appropriately suppress only a frequency component greater in level than the ambient sound around the first microphone in the first playback sound leaking to the second playback area. Similarly to this, it is possible to appropriately suppress, in the second playback sound leaking to the first playback area, only a frequency component greater in level than the ambient sound around the second microphone.

(8) In the acoustic device according to (6) or (7), the first generation unit may generate a first playback sound signal indicating the first playback sound listened to at an installation location of the first microphone, based on the first playback signal and the first transfer characteristic, generate, as the first background-noise signal, a signal in which the first playback sound signal is subtracted from the first detection sound signal, generate a second playback sound signal indicating the second playback sound listened to at an installation location of the second microphone, based on the second playback signal and the second transfer characteristic, generate, as the second background-noise signal, a signal in which the second playback sound signal is subtracted from the second detection sound signal, and the second generation unit may generate the first leakage sound signal based on the first playback sound signal and a first approximation characteristic approximating a difference characteristic between the first transfer characteristic and the third transfer characteristic, and generate the second leakage sound signal based on the second playback sound signal and a second approximation characteristic approximating a difference characteristic between the second transfer characteristic and the fourth transfer characteristic.

According to the present configuration, the first leakage sound signal is generated based on the first playback sound signal generated by the first generation unit and the first approximation characteristic approximating the difference characteristic between the first transfer characteristic and the third transfer characteristic. Therefore, the present configuration can reduce the scale of the configuration and the calculation amount necessary for generation of the first leakage sound signal as compared with the case of generating the first leakage sound signal based on the first playback signal and the third transfer characteristic. Similarly to this, according to the present configuration, it is possible to reduce the scale of the configuration and the calculation amount necessary for generation of the second leakage sound signal as compared with the case of generating the second leakage sound signal based on the second playback signal and the fourth transfer characteristic.

(9) In the acoustic device according to (8), the first approximation characteristic and the second approximation characteristic may indicate that a level of each of a plurality of frequency components in a voice signal is constant.

In the present configuration, the first approximation characteristic and the second approximation characteristic indicate that a level of each of a plurality of frequency components in a voice signal is constant. Therefore, according to the present configuration, it is possible to easily generate the first leakage sound signal only by uniformly changing, by a certain amount, the levels of all frequency components of the first playback sound signal. Similarly to this, according to the present configuration, it is possible to easily generate the second leakage sound signal only by uniformly changing, by a certain amount, the levels of all frequency components of the second playback sound signal.

(10) In the acoustic device according to (8), the first approximation characteristic and the second approximation characteristic may indicate that a level of a frequency component lower than a predetermined reference frequency component in a voice signal is a first level that is constant, and a level of a frequency component higher than the reference frequency component in a voice signal is a second level that is constant and different from the first level.

In the present configuration, the first approximation characteristic and the second approximation characteristic indicate that the level of the frequency component lower than the reference frequency component in the voice signal and the level of the frequency component higher than the reference frequency component are different constant levels. Therefore, according to the present configuration, it is possible to easily generate the first leakage sound signal only by uniformly changing, by a certain amount, the level of the frequency component lower than the reference frequency component in the first playback sound signal and uniformly changing, by a certain amount, the level of the frequency component higher than the reference frequency component in the first playback sound signal. Similarly, according to the present configuration, it is possible to easily generate the second leakage sound signal only by uniformly changing, by a certain amount, the level of the frequency component lower than the reference frequency component in the second playback sound signal and uniformly changing, by a certain amount, the level of the frequency component higher than the reference frequency component in the second playback sound signal.

(11) In the acoustic device according to (6), the first representative point may be a location where the second microphone is installed, and the second representative point may be a location where the first microphone is installed.

According to the present configuration, since the first representative point located in the second playback area is the location where the second microphone is installed, the third transfer characteristic, which is the transfer characteristic of the voice signal from the first speaker to the first representative point, can be derived using the second detection sound signal indicating the detection sound detected by the second microphone.

Therefore, the present configuration can reduce the cost and effort required to derive the third transfer characteristic as compared with the case where a microphone other than the second microphone is installed in the second playback area, and the transfer characteristic of the voice signal from the first speaker to the installation location of the microphone is derived as the third transfer characteristic. Similarly, according to the present configuration, it is possible to reduce the cost and effort required to derive the fourth transfer characteristic as compared with the case where a microphone other than the first microphone is installed in the first playback area, and the transfer characteristic of the voice signal from the second speaker to the installation location of the microphone is derived as the fourth transfer characteristic.

(12) In the acoustic device according to (1), the speaker may include a first speaker and a second speaker installed in an identical seat, the playback area may include a common playback area for listening to a first playback sound played back by the first speaker and a second playback sound played back by the second speaker, the representative point may include a first representative point and a second representative point located outside the common playback area, the microphone may include a first microphone installed in proximity to the first speaker and a second microphone installed in proximity to the second speaker, the first characteristic may include a first first characteristic that is a transfer characteristic of a voice signal from the first speaker to the first microphone, and a second first characteristic that is a transfer characteristic of a voice signal from the second speaker to the second microphone, the second characteristic may include a first second characteristic that is a transfer characteristic of a voice signal from the first speaker to the first representative point, and a second second characteristic that is a transfer characteristic of a voice signal from the second speaker to the second representative point, the first generation unit may generate a first background-noise signal indicating ambient sound around the first microphone, based on a first playback signal output from a sound source of the first playback sound, a first detection sound signal indicating a detection sound detected by the first microphone, and the first first characteristic, and may generate a second background-noise signal indicating ambient sound around the second microphone, based on a second playback signal output from a sound source of the second playback sound, a second detection sound signal indicating a detection sound detected by the second microphone, and the second first characteristic, the second generation unit may generate a first leakage sound signal indicating the first playback sound listened to at the first representative point, based on the first playback signal and the first second characteristic, and may generate a second leakage sound signal indicating the second playback sound listened to at the second representative point, based on the second playback signal and the second second characteristic, and the adjustment unit may adjust levels of the first playback signal and the second playback signal so that a level of the first leakage sound signal is smaller than a level of the first background-noise signal, and a level of the second leakage sound signal is smaller than a level of the second background-noise signal.

In the present configuration, the first background-noise signal indicating the ambient sound around the first microphone and the first leakage sound signal indicating the first playback sound listened to at the first representative point located outside the common playback area are generated, and the second background-noise signal indicating the ambient sound around the second microphone and the second leakage sound signal indicating the second playback sound listened to at the second representative point located outside the common playback area are generated. Then, the levels of the first playback signal and the second playback signal are adjusted so that the level of the first leakage sound signal is smaller than the level of the first background-noise signal and the level of the second leakage sound signal is smaller than the level of the second background-noise signal.

As described above, the present configuration adjusts the levels of the first playback signal and the second playback signal by comparing the level of the first leakage sound signal indicating not the first playback sound having a great level detected by the first microphone but the first playback sound listened to at the first representative point with the level of the first background-noise signal, and comparing the level of the second leakage sound signal indicating not the second playback sound having a great level detected by the second microphone but the second playback sound listened to at the second representative point with the level of the second background-noise signal. Therefore, in the present configuration, the levels of the first playback signal and the second playback signal can be appropriately adjusted without being excessively adjusted. Due to this, with the present configuration, the first playback sound and the second playback sound can be normally listened to in the common playback area for listening to the first playback sound and the second playback sound.

Moreover, the present configuration can also avoid the first playback sound and the second playback sound from being perceived in the outside of the common playback area, by making the level of the first playback sound listened to at the first representative point indicated by the first leakage sound signal smaller than the level of the ambient sound around the first microphone indicated by the first background-noise signal, and making the level of the second playback sound listened to at the second representative point indicated by the second leakage sound signal smaller than the level of the ambient sound around the second microphone indicated by the second background-noise signal.

(13) In the acoustic device according to (12), the adjustment unit may specify a first frequency component that is a frequency component greater in level than the first background-noise signal in the first leakage sound signal, specify a second frequency component that is a frequency component greater in level than the second background-noise signal in the second leakage sound signal, and attenuate a level of a third frequency component, which is a frequency component corresponding to the first frequency component or the second frequency component, in each of the first playback signal and the second playback signal, by equal to or greater than a larger difference between a difference between a level of the third frequency component in the first leakage sound signal and a level of the third frequency component in the first background-noise signal and a difference between a level of the third frequency component in the second leakage sound signal and a level of the third frequency component in the second background-noise signal.

According to the present configuration, the level of the third frequency component in each of the first playback sound and the second playback sound leaking to the outside of the common playback area can be appropriately suppressed by using the larger difference between the difference between the level of the third frequency component in the first leakage sound signal and the level of the third frequency component in the first background-noise signal and the difference between the level of the third frequency component in the second leakage sound signal and the level of the third frequency component in the second background-noise signal.

(14) A playback method according to another aspect of the present disclosure is a playback method in an acoustic device that adjusts playback sound played back by a speaker so that the playback sound is listened to in a predetermined playback area, the playback method including: generating a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone; generating a leakage sound signal indicating the playback sound listened to at a representative point located outside the playback area, based on the playback signal and a second characteristic that is a transfer characteristic of a voice signal from the speaker to the representative point; and adjusting a level of the playback signal so that a level of the leakage sound signal is smaller than a level of the background-noise signal.

According to the present configuration, the same actions and effects as those of the acoustic device according to (1) can be obtained.

(15) A program according to another aspect of the present disclosure is a program causing a computer of an acoustic device that adjusts playback sound played back by a speaker so that the playback sound is listened to in a predetermined playback area to execute processing, the program causing the computer to execute processing of generating a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone, generating a leakage sound signal indicating the playback sound listened to at a representative point located outside the playback area, based on the playback signal and a second characteristic that is a transfer characteristic of a voice signal from the speaker to the representative point, and adjusting a level of the playback signal so that a level of the leakage sound signal is smaller than a level of the background-noise signal.

According to the present configuration, the same actions and effects as those of the acoustic device according to (1) can be obtained.

(16) A playback method according to another aspect of the present disclosure is a playback method in an acoustic device that adjusts a first playback sound played back by a first speaker and a second playback sound played back by a second speaker so that the first playback sound is listened to in a predetermined first playback area and the second playback sound is listened to in a predetermined second playback area, in which the first speaker is installed in a first seat, the second speaker is installed in a second seat in proximity to the first seat, and the playback method includes generating a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone, generating a second background-noise signal indicating ambient sound around a second microphone installed in proximity to the second speaker, based on a second playback signal output from a sound source of the second playback sound, a second detection sound signal indicating a detection sound detected by the second microphone, and a second transfer characteristic that is a transfer characteristic of a voice signal from the second speaker to the second microphone, generating a first leakage sound signal indicating the first playback sound listened to at a first representative point located in the second playback area, based on the first playback signal and a third transfer characteristic that is a transfer characteristic of a voice signal from the first speaker to the first representative point, generating a second leakage sound signal indicating the second playback sound listened to at a second representative point located in the first playback area, based on the second playback signal and a fourth transfer characteristic that is a transfer characteristic of a voice signal from the second speaker to the second representative point, adjusting a level of the first playback signal so that a level of the first leakage sound signal is smaller than a level of the first background-noise signal, and adjusting a level of the second playback signal so that a level of the second leakage sound signal is smaller than a level of the second background-noise signal.

According to the present configuration, the same actions and effects as those of the acoustic device according to (6) can be obtained.

(17) A program according to another aspect of the present disclosure is a program causing a computer of an acoustic device that adjusts a first playback sound played back by a first speaker and a second playback sound played back by a second speaker so that the first playback sound is listened to in a predetermined first playback area and the second playback sound is listened to in a predetermined second playback area to execute processing, in which the first speaker is installed in a first seat, the second speaker is installed in a second seat in proximity to the first seat, and the program causing the computer to execute processing of generating a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone, generating a second background-noise signal indicating ambient sound around a second microphone installed in proximity to the second speaker, based on a second playback signal output from a sound source of the second playback sound, a second detection sound signal indicating a detection sound detected by a second microphone, and a second transfer characteristic that is a transfer characteristic of a voice signal from the second speaker to the second microphone, generating a first leakage sound signal indicating the first playback sound listened to at a first representative point located in the second playback area, based on the first playback signal and a third transfer characteristic that is a transfer characteristic of a voice signal from the first speaker to the first representative point, generating a second leakage sound signal indicating the second playback sound listened to at a second representative point located in the first playback area, based on the second playback signal and a fourth transfer characteristic that is a transfer characteristic of a voice signal from the second speaker to the second representative point, adjusting a level of the first playback signal so that a level of the first leakage sound signal is smaller than a level of the first background-noise signal, and adjusting a level of the second playback signal so that a level of the second leakage sound signal is smaller than a level of the second background-noise signal.

According to the present configuration, the same actions and effects as those of the acoustic device according to (6) can be obtained.

The present disclosure can also be implemented as a system that operates by such a program. It is needless to say that such a computer program can be distributed via a computer-readable non-transitory recording medium such as a CD-ROM or via a communication network such as the Internet.

Note that each embodiment described below illustrates a specific example of the present disclosure. The constituent elements, the arrangement locations of the constituent elements, the connection forms, the order of the operations, and the like indicated in the following embodiments are merely examples, and are not intended to limit the present disclosure. A constituent element not described in an independent claim representing the highest concept among constituent elements in the embodiments below is described as an arbitrary constituent element. In all the embodiments, respective contents can be combined.

### (First Embodiment)

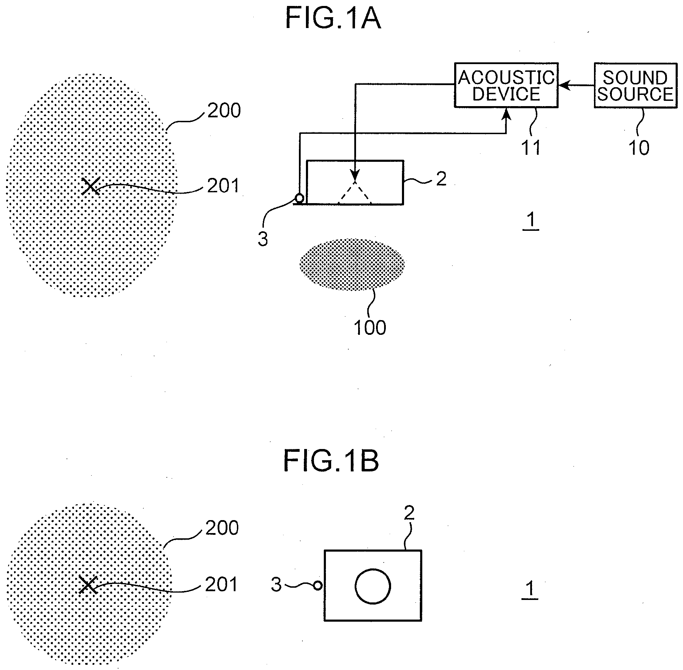

Hereinafter, the configuration of an acoustic system 1 according to the first embodiment will be described. FIG. 1A is a top view illustrating an example of the configuration of the acoustic system 1 according to the first embodiment. FIG. 1B is a front view illustrating an example of the configuration of the acoustic system 1 according to the first embodiment. As illustrated in FIG. 1A, the acoustic system 1 includes a speaker 2, a microphone 3, a sound source 10, and an acoustic device 11.

In the acoustic system 1, an audio signal indicating music, voice, and/or the like output from the sound source 10 such as a CD player is subjected to signal processing by the acoustic device 11 and then played back by the speaker 2. The playback sound played back by the speaker 2 is detected by the microphone 3 installed in the vicinity of the speaker 2. A detection sound signal indicating the detection sound detected by the microphone 3 is input to the acoustic device 11.

The acoustic system 1 causes the playback sound played back by the speaker 2 to be listened to in the playback area 100 set in front of the speaker 2 at a location in proximity to the speaker 2. On the other hand, the acoustic system 1 prevents the playback sound from being perceived in the non-playback area 200 located outside the playback area 100. Therefore, the acoustic device 11 adjusts the level of the audio signal output from the sound source 10 using the detection sound signal detected by the microphone 3.

However, in reality, since the playback sound leaks to the non-playback area 200, it is difficult to set the level of the playback sound to "0" in the non-playback area 200. However, if the level of the playback sound leaking to the non-playback area 200 (hereinafter, leakage sound) is lower than the level of the ambient sound around the non-playback area 200 (hereinafter, background noise), the leakage sound is lost in the background noise and cannot be listened to.

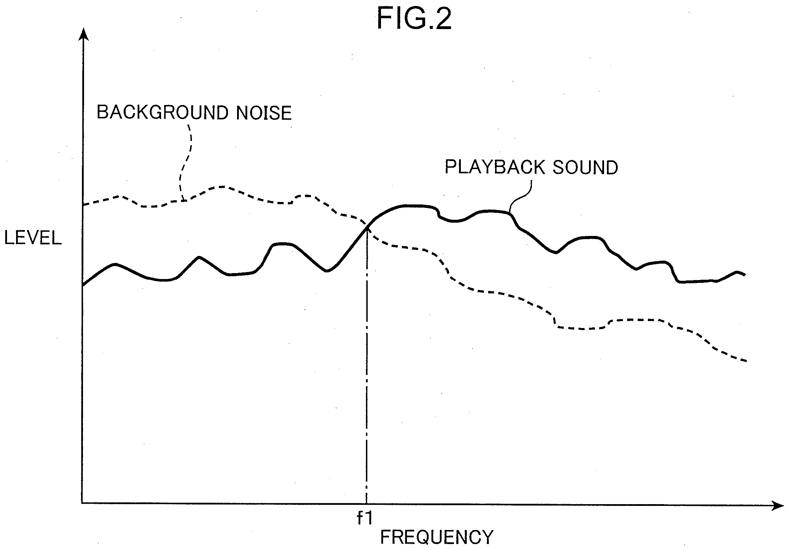

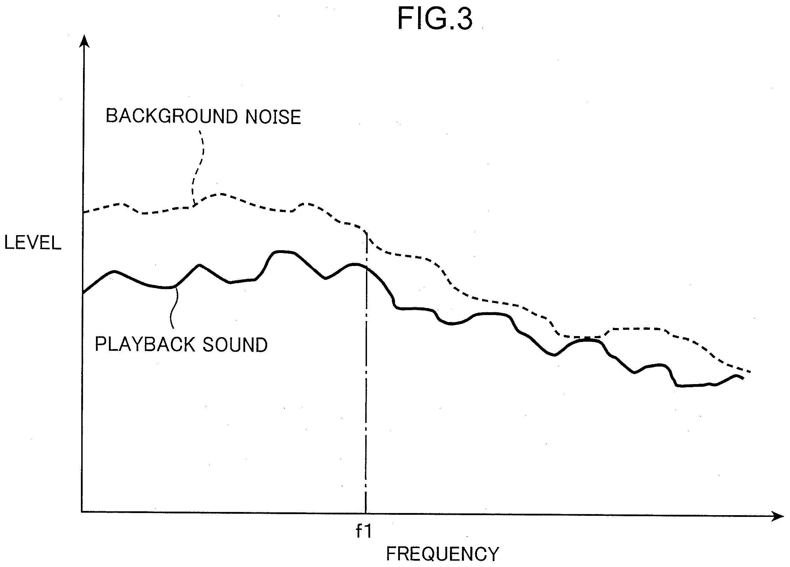

FIGS. 2 and 3 are views illustrating examples of frequency characteristics of playback sound and background noise in the non-playback area 200. In FIGS. 2 and 3, the horizontal axis represents the frequency components of the playback sound and the background noise in the non-playback area 200, and the vertical axis represents the level of each frequency component of the playback sound and the background noise. For example, as illustrated in FIG. 2, when the level of the playback sound of the frequency component of equal to or greater than a frequency f1 is larger than the level of the background noise, a person present at a representative point 201 representing the non-playback area 200 perceives the playback sound of the frequency component of equal to or greater than the frequency f1. On the other hand, the playback sound of the frequency component of equal to or less than the frequency f1 is masked by the background noise, it is not perceived by the person present at the representative point 201 representing the non-playback area 200.

Note that general background noise has a characteristic that the level decreases as the frequency increases. For example, not only noise of vehicles such as a train, an aircraft, and an automobile, but also noise in a factory, noise in an office, and the like have this characteristic.

Therefore, as illustrated in FIG. 3, the acoustic device 11 performs signal processing of reducing the level of frequency components equal to or greater than the frequency f1 in an audio signal. Due to this, at the representative point 201, the level of the playback sound no longer exceeds the level of the background noise, and the playback sound is no longer perceived by the person present at the representative point 201.

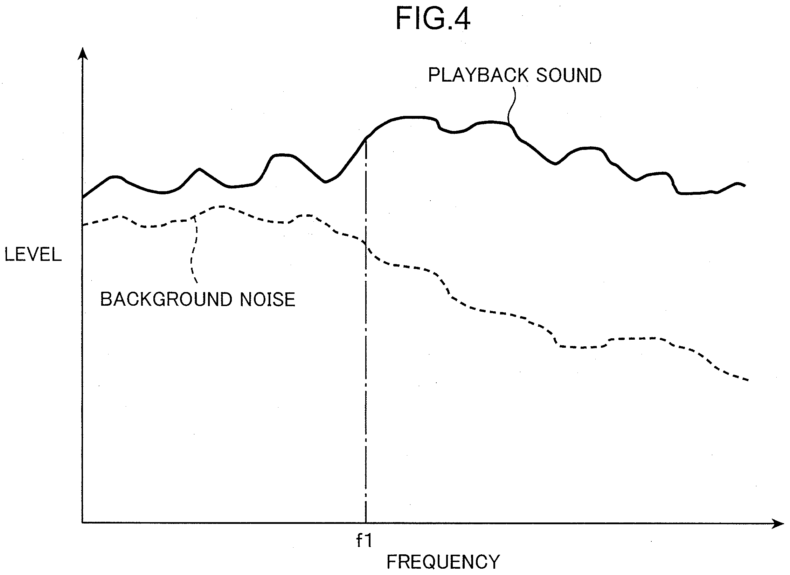

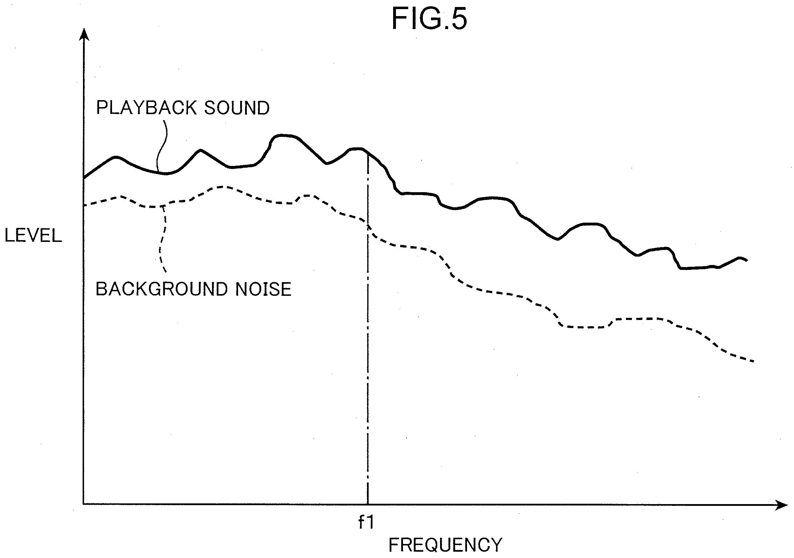

FIGS. 4 and 5 are views illustrating examples of frequency characteristics of the playback sound and the background noise in the playback area 100. In FIGS. 4 and 5, the horizontal axis represents the frequency components of the playback sound and the background noise in the playback area 100, and the vertical axis represents the level of each frequency component of the playback sound and the background noise. When the signal processing is performed in the acoustic device 11, the level of the frequency components equal to or greater than the frequency f1 of the playback sound listened to by the person present in the playback area 100 also decreases. However, since the playback area 100 is closer to the speaker 2 than the representative point 201, before the signal processing is performed, the level of the playback sound is sufficiently larger than the level of the background noise as illustrated in FIG. 4, for example. Therefore, as illustrated in FIG. 5, also after the signal processing is performed, the playback sound is perceived by the person present in the playback area 100 without being lost in the background noise.

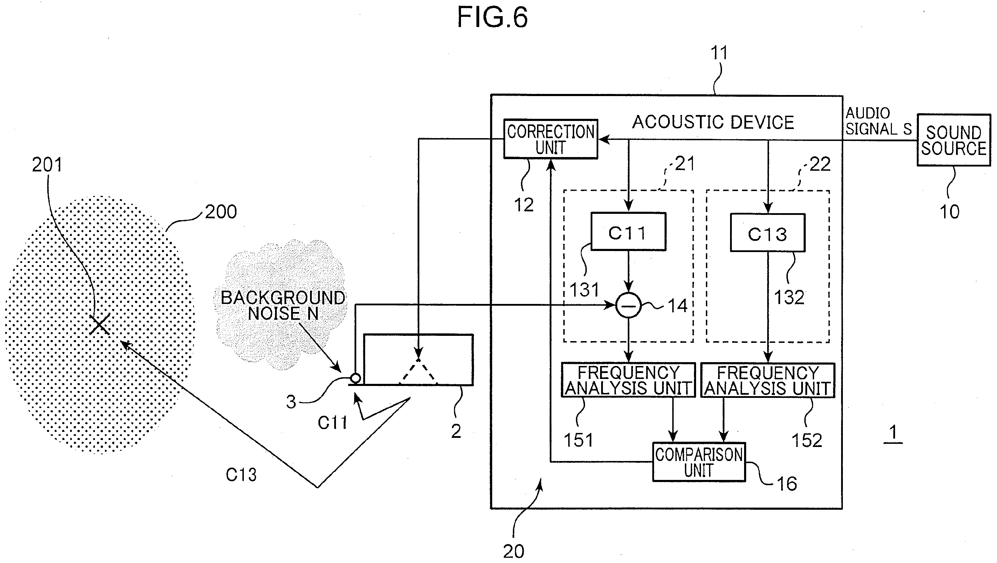

The signal processing performed in the acoustic device 11 will be described in more detail with reference to FIG. 6. FIG. 6 is a view illustrating an example of a detailed configuration of the acoustic system 1 according to the first embodiment. As illustrated in FIG. 6, the acoustic device 11 includes, for example, a computer including a central processing unit (CPU) such as a digital signal processor (DSP) or a micro-processing unit (MPU), i.e., microprocessor, a memory, and an integrated circuit such as a field programmable gate array (FPGA).

The acoustic device 11 functions as a first generation unit 21, a second generation unit 22, and an adjustment unit 20 by the CPU executing a control program (program) stored in the memory. The first generation unit 21 includes a transfer characteristic correction unit 131 and a subtraction unit 14, and the second generation unit 22 includes a transfer characteristic correction unit 132. The adjustment unit 20 includes two frequency analysis units 151 and 152, a comparison unit 16, and a correction unit 12. Note that each unit of the first generation unit 21, the second generation unit 22, and the adjustment unit 20 may be configured by a dedicated hardware circuit.

An audio signal S (playback signal) output after being adjusted to a level corresponding to a volume set by a listener in the sound source 10 is input to the adjustment unit 20. In the adjustment unit 20, the correction unit 12 adjusts the audio signal S having been input to a level (e.g., 0 dB) corresponding to a predetermined initial value, and causes the speaker 2 to play back the audio signal S after adjustment. The microphone 3 detects sound in which the playback sound played back by the speaker 2 and background noise N around the microphone 3 are mixed, and outputs, to the subtraction unit 14, a detection sound signal indicating the detection sound having been detected.

The audio signal S output from the sound source 10 is also input to the first generation unit 21. The first generation unit 21 generates a background-noise signal indicating the ambient sound around the microphone 3 based on the audio signal S having been input, a detection sound signal indicating the detection sound detected by the microphone 3, and a transfer characteristic (first characteristic) of a voice signal from the speaker 2 to the microphone 3.

Specifically, in the first generation unit 21, the transfer characteristic correction unit 131 performs, using a coefficient "C11", convolution processing on the audio signal S having been input, thereby generating a signal after the convolution processing as a playback sound signal indicating the playback sound listened to at the installation location of the microphone 3. The transfer characteristic correction unit 131 outputs, to the subtraction unit 14, the playback sound signal having been generated.

Here, the coefficient "C11" is a coefficient approximating a transfer characteristic of the voice signal from the speaker 2 to the microphone 3. The coefficient "C11" is defined in advance based on the detection sound signal indicating detection sound detected by the microphone 3, for example, in a case where the speaker 2 is caused to play back an experimental voice signal. Hereinafter, the coefficient "C11" may be described as a transfer characteristic C11 from the speaker 2 to the microphone 3.

The subtraction unit 14 generates, as a background-noise signal indicating background noise around the microphone 3, a signal in which the playback sound signal generated by the transfer characteristic correction unit 131 is subtracted from the detection sound signal indicating the detection sound detected by the microphone 3.

Specifically, the detection sound signal indicating the detection sound detected by the microphone 3 can be expressed as "C11 · S + N", and the playback sound signal generated by the transfer characteristic correction unit 131 can be expressed as "C11 · S". Here, "S" indicates the audio signal S. "N" is a voice signal indicating the background noise N around the microphone 3. The subtraction unit 14 generates, as a background-noise signal indicating the background noise around the microphone 3, a voice signal "N (= C11 · S + N - C11 · S)" in which the playback sound signal "C11 · S" is subtracted from the detection sound signal "C11 · S + N".

The audio signal S output from the sound source 10 is also input to the second generation unit 22. Based on the audio signal S having been input and a transfer characteristic (second characteristic) of a voice signal from the speaker 2 to the representative point 201 of the non-playback area 200, the second generation unit 22 generates a leakage sound signal indicating the playback sound listened to at the representative point 201.

Specifically, in the second generation unit 22, the transfer characteristic correction unit 132 performs, using a coefficient "C13", convolution processing on the audio signal S having been input, thereby generating a voice signal "C13 · S" after the convolution processing as a leakage sound signal indicating the playback sound listened to at the representative point 201 of the non-playback area 200.

Here, the coefficient "C13" is a coefficient approximating a transfer characteristic of the voice signal from the speaker 2 to the representative point 201 of the non-playback area 200. The coefficient "C13" is defined in advance based on the detection sound signal indicating detection sound detected by a microphone installed at the representative point 201 of the non-playback area 200, for example, in a case where the speaker 2 is caused to play back an experimental voice signal. Hereinafter, the coefficient "C13" may be described as a transfer characteristic C13 from the speaker 2 to the representative point 201.

Note that the representative point 201 of the non-playback area 200 may be an arbitrary location outside the playback area 100, such as the location of the microphone 3 installed in proximity to the speaker 2, for example. When the representative point 201 is the location of the microphone 3, the coefficient "C13" can be defined using the microphone 3 without taking time and effort to move the installation location of the microphone 3 or time and effort to install a microphone other than the microphone 3 at the representative point 201.

The adjustment unit 20 adjusts the level of the audio signal S input from the sound source 10 so that the level of the leakage sound signal generated by the second generation unit 22 is smaller than the level of the background-noise signal generated by the first generation unit 21. The adjustment unit 20 causes the speaker 2 to play back the audio signal S after adjustment.

Specifically, in the adjustment unit 20, by performing predetermined frequency analysis processing such as fast Fourier transform (FFT), the frequency analysis unit 151 calculates the level of each of the plurality of frequency components in the background-noise signal generated by the first generation unit 21. Similarly to the frequency analysis unit 151, by performing predetermined frequency analysis processing such as fast Fourier transform (FFT), the frequency analysis unit 152 calculates the level of each of the plurality of frequency components in the leakage sound signal generated by the second generation unit 22.

The comparison unit 16 compares the level of each frequency component of the background-noise signal calculated by the frequency analysis unit 151 with the level of each frequency component of the leakage sound signal calculated by the frequency analysis unit 152, and outputs, to the correction unit 12, as a comparison result, a magnitude relationship and a difference between the level of each frequency component of the background-noise signal and the level of each frequency component of the leakage sound signal.

Based on the comparison result input from the comparison unit 16, the correction unit 12 adjusts the level of the audio signal S input from the sound source 10 so that the level of the leakage sound signal is smaller than the level of the background-noise signal. The correction unit 12 causes the speaker 2 to play back the audio signal S after adjustment.

Specifically, the correction unit 12 attenuates the level of the frequency component corresponding to a target frequency component in the audio signal S by equal to or greater than a difference between the level of the frequency component (hereinafter, the target frequency component) greater in level than the background-noise signal in the leakage sound signal and the level of the frequency component corresponding to the target frequency component in the background-noise signal.

For example, the correction unit 12 attenuates the level of the frequency component corresponding to the target frequency component in the audio signal S by a level larger by a predetermined error level than the difference between the level of the target frequency component in the leakage sound signal and the level of the frequency component corresponding to the target frequency component in the background-noise signal. The frequency component corresponding to the target frequency component in the voice signal is a frequency component having the same frequency as the target frequency component among the plurality of frequency components included in the voice signal.

However, the present invention is not limited to this, and the correction unit 12 may attenuate the level of the frequency component corresponding to the target frequency component in the audio signal S by the difference between the level of the target frequency component in the leakage sound signal and the level of the frequency component corresponding to the target frequency component in the background-noise signal without using the error level.

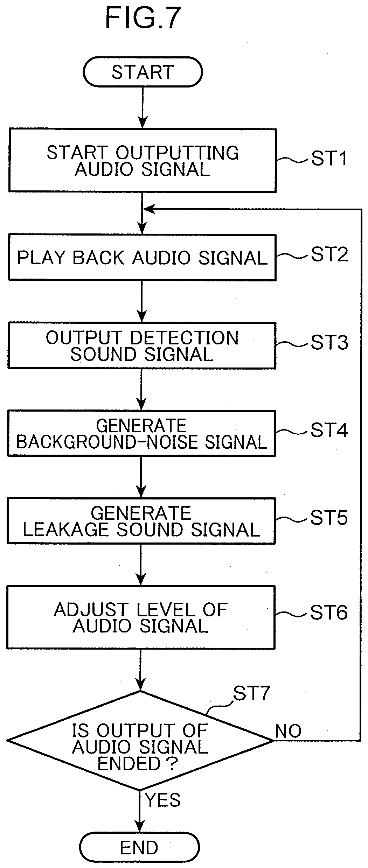

Next, the flow of the signal processing described above performed in the acoustic device 11 will be described. FIG. 7 is a flowchart showing an example of the signal processing performed in the acoustic device 11. As shown in FIG. 7, when output of the audio signal S adjusted to the level corresponding to the volume set by the listener in the sound source 10 is started, the audio signal S is input to the correction unit 12, the first generation unit 21, and the second generation unit 22 (step ST1).

The correction unit 12 causes the speaker 2 to play back the audio signal S input in step ST1. The correction unit 12 causes the speaker 2 to play back the audio signal S whose level has been adjusted in step S6 described later (step ST2). The microphone 3 detects sound in which the playback sound played back by the speaker 2 and background noise around the microphone 3 are mixed, and outputs, to the subtraction unit 14, a detection sound signal indicating the detection sound having been detected (step ST3).

The first generation unit 21 generates the background-noise signal indicating the ambient sound around the microphone 3 based on the audio signal S having been input, the detection sound signal indicating the detection sound detected by the microphone 3, and the transfer characteristic C11 of the voice signal from the speaker 2 to the microphone 3 (step ST4).

Based on the audio signal S having been input and the transfer characteristic C13 of the voice signal from the speaker 2 to the representative point 201 of the non-playback area 200, the second generation unit 22 generates a leakage sound signal indicating the playback sound listened to at the representative point 201 (step ST5).

The adjustment unit 20 adjusts the level of the audio signal S input from the sound source 10 so that the level of the leakage sound signal generated in step ST5 is smaller than the level of the background-noise signal generated in step ST4 (step ST6).

If the output of the audio signal S by the sound source 10 has not ended (NO in step ST7), the processing in and after step ST2 is repeated. On the other hand, if the output of the audio signal S by the sound source 10 has ended (YES in step ST7), the acoustic device 11 ends the signal processing.

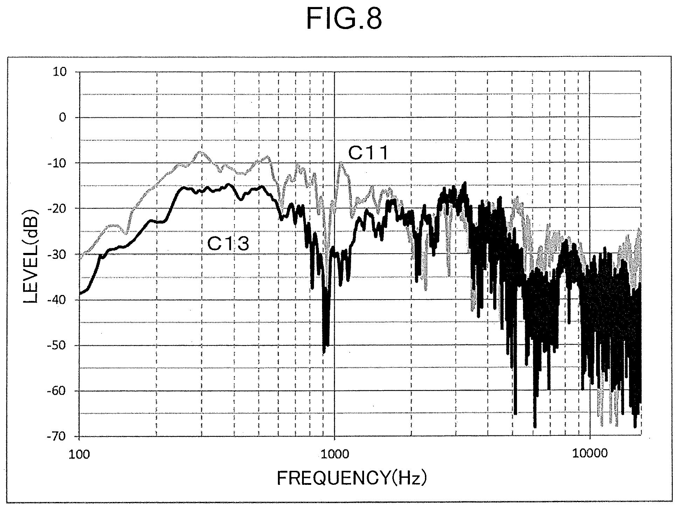

Next, effects obtained from the configuration of the first embodiment will be described. FIG. 8 is a view illustrating examples of the transfer characteristic C11 from the speaker 2 to the microphone 3 and the transfer characteristic C13 from the speaker 2 to the representative point 201 of the non-playback area 200.

As illustrated in FIG. 6, the distance from the speaker 2 to the representative point 201 of the non-playback area 200 is greater than the distance from the speaker 2 to the microphone 3. Therefore, the level of the playback sound at the representative point 201 is smaller than the level of the playback sound at the installation location of the microphone 3 due to an influence of distance attenuation. Therefore, for example, as illustrated in FIG. 8, the level of the transfer characteristic C13 from the speaker 2 to the representative point 201 is smaller than the level of the transfer characteristic C11 from the speaker 2 to the microphone 3.

In the configuration of the first embodiment, a background-noise signal indicating ambient sound around the microphone 3 and a leakage sound signal indicating playback sound listened to at the representative point 201 of the non-playback area 200 are generated, and the level of the audio signal S is adjusted so that the level of the leakage sound signal is smaller than the level of the background-noise signal.

As described above, the present configuration adjusts the level of the audio signal S by comparing the leakage sound signal indicating not the playback sound having a great level detected by the microphone 3 but the playback sound listened to at the representative point 201 with the background-noise signal. Therefore, the level of the audio signal S can be appropriately adjusted without being excessively adjusted. Due to this, the present configuration allows the listener present in the playback area 100 to normally listen to the playback sound. Moreover, the present configuration can also avoid the playback sound from being perceived in the non-playback area 200, by making the level of the playback sound listened to in the non-playback area 200 indicated by the leakage sound signal smaller than the level of the ambient sound around the microphone 3 indicated by the background-noise signal.

### (Modification of First Embodiment)

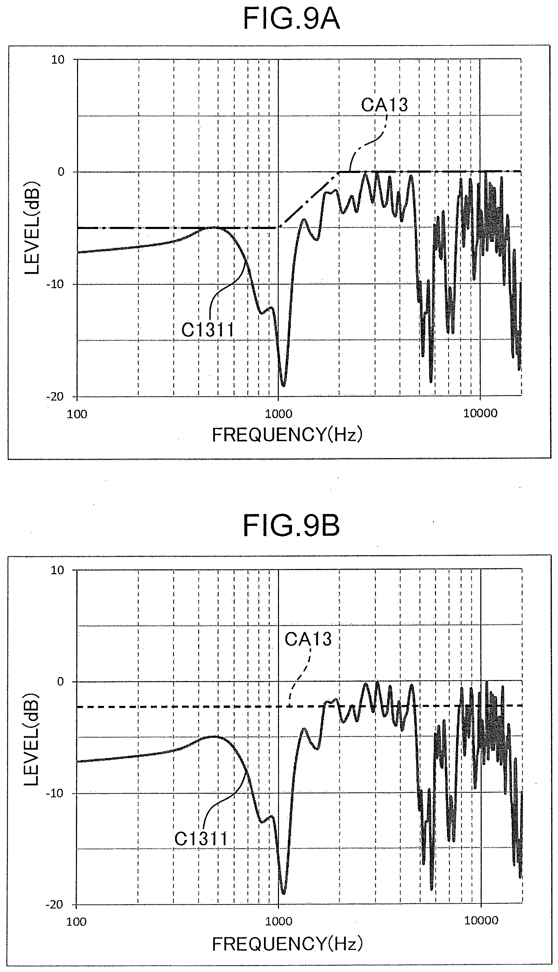

The configuration of the first embodiment may be modified as follows. FIGS. 9A and 9B are views illustrating examples of a difference characteristic C1311 and an approximation characteristic CA13 thereof of the two transfer characteristics C13 and C11. As illustrated in FIGS. 9A and 9B, by approximating the difference characteristic C1311 between the transfer characteristic C11 and the transfer characteristic C13, it is possible to derive the approximation characteristic CA13 as indicated by the one-dot chain line in FIG. 9A and the broken line in FIG. 9B. Therefore, the second generation unit 22 may generate the leakage sound signal using this approximation characteristic CA13.

Note that the approximation characteristic CA13 indicated by the one-dot chain line in FIG. 9A indicates that the level of the frequency component lower than 1 KHz in the voice signal is constant at -5 dB, the level of the frequency component of equal to or greater than 1 KHz and equal to or less than 2 KHz linearly increases from -5 dB to 0 dB, and the level of the frequency component higher than 2 KHz is constant at 0 dB. That is, the approximation characteristic CA13 is the difference characteristic C1311 between the transfer characteristic C11 and the transfer characteristic C13 approximated so as to be a characteristic similar to the frequency characteristic of a low shelving filter. The approximation characteristic CA13 indicated by the broken line portion in FIG. 9B indicates that the level of each frequency component in the voice signal is constant at -2 dB.

However, the approximation characteristic CA13 is not limited to the examples illustrated in FIGS. 9A and 9B, and may indicate that the level of a frequency component lower than a reference frequency such as 1 KHz in the voice signal is constant at -5 dB, and the level of a frequency component higher than the reference frequency 1 KHz is constant at 0 dB.

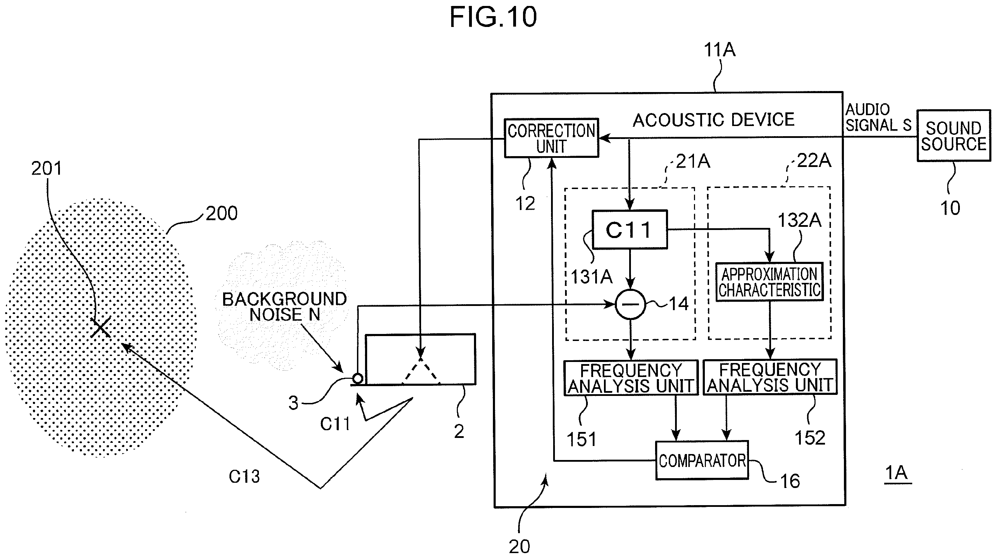

FIG. 10 is a view illustrating an example of the configuration of an acoustic system 1A according to a modification of the first embodiment. Specifically, as illustrated in FIG. 10, an acoustic device 11A included in the acoustic system 1A of the modification functions as a first generation unit 21A and a second generation unit 22A in place of the first generation unit 21 and the second generation unit 22 (FIG. 6). The first generation unit 21A includes a transfer characteristic correction unit 131A in place of the transfer characteristic correction unit 131 (FIG. 6). The second generation unit 22A includes a transfer characteristic correction unit 132A in place of the transfer characteristic correction unit 132 (FIG. 6).

In the first generation unit 21A, the transfer characteristic correction unit 131A outputs the generated playback sound signal to not only the subtraction unit 14 but also the second generation unit 22A. In the second generation unit 22A, the transfer characteristic correction unit 132A generates a leakage sound signal using the playback sound signal input from the first generation unit 21A and the approximation characteristic CA13 in place of the audio signal S output from the sound source 10 and the transfer characteristic C13.

That is, the transfer characteristic correction unit 132A performs convolution processing on a playback sound signal "C11 · S" generated by the transfer characteristic correction unit 131A using the approximation characteristic CA13 approximating the difference characteristic C1311 between the transfer characteristic C13 and the transfer characteristic C11. As a result, the transfer characteristic correction unit 132 outputs a leakage sound signal having a characteristic close to the leakage sound signal "C13 · S" generated by the transfer characteristic correction unit 132A of FIG. 6. This gives effects equivalent to the effects obtained from the configuration of the acoustic system 1 illustrated in FIG. 6.

In a case where the transfer characteristic correction unit 132A generates a leakage sound signal using the approximation characteristic CA13 illustrated in FIG. 9A, the leakage sound signal can be easily generated only by uniformly attenuating, by 5 dB, the level of the frequency component lower than 1 KHz in the playback sound signal and linearly attenuating the level of the frequency component of equal to or greater than 1 KHz and equal to or less than 2 KHz in the playback sound signal. In a case where the transfer characteristic correction unit 132A generates a leakage sound signal using the approximation characteristic CA13 illustrated in FIG. 9B, the leakage sound signal can be easily generated only by uniformly attenuating, by 2 dB, the level of each frequency component in the playback sound signal.

It is assumed that the transfer characteristic correction unit 132 generates the leakage sound signal using the approximation characteristic CA13 indicating that the level of the frequency component lower than the reference frequency in the voice signal is the first level that is constant and the level of the frequency component higher than the reference frequency is the second level different from the first level that is constant as described above. In this case, it is possible to easily generate the leakage sound signal only by uniformly attenuating, by the amount corresponding to the absolute value of the first level, the level of the frequency component lower than the reference frequency in the playback sound signal and uniformly attenuating, by the amount corresponding to the absolute value of the second level, the level of the frequency component higher than the reference frequency in the playback sound signal.

As described above, according to the acoustic device 11A of the present modification, generation of the leakage sound signal in the second generation unit 22A can be easily implemented using a biquadratic filter or the like by an infinite impulse response (IIR) filter, for example. Therefore, it is possible to reduce the scale of the configuration and the calculation amount necessary for generation of the leakage sound signal as compared with the acoustic device 11 illustrated in FIG. 6.

In the above, the sound systems 1 and 1A including the acoustic devices 11 and 11A that perform signal processing on the audio signal S of one channel output from the sound source 10 have been described. However, audio signals of a plurality of channels such as 2 channels (stereo) are normally output from the sound source 10 such as a CD player.

Therefore, an acoustic system including an acoustic device that performs signal processing on audio signals of a plurality of channels output from a sound source 90 will be described below. Hereinafter, an acoustic system 1B including an acoustic device 11B that performs signal processing on audio signals S1 and S2 of two channels (stereo) output from the sound source 90 will be described as a representative of the acoustic system.

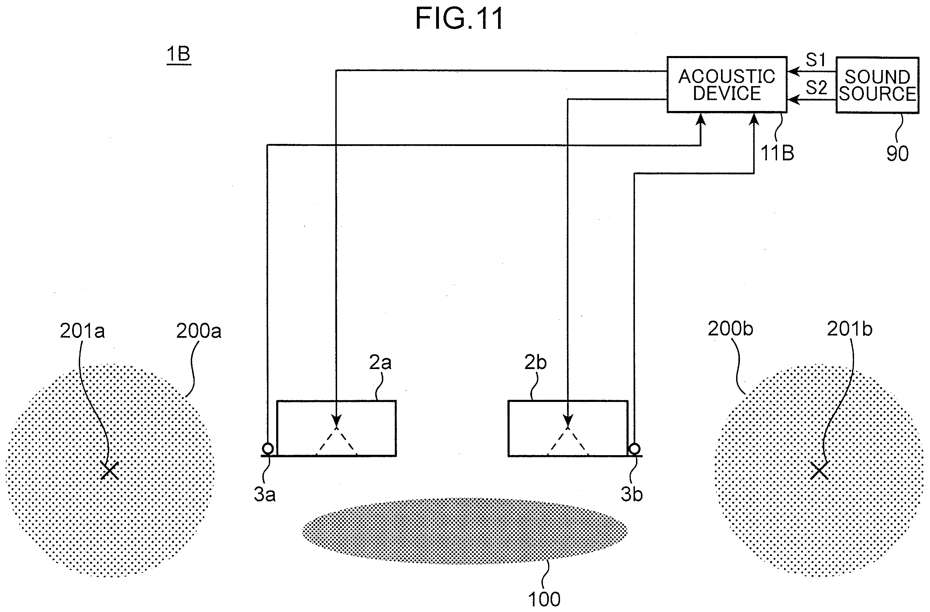

FIG. 11 is a view illustrating an example of the configuration of the acoustic system 1B according to another modification of the first embodiment. As illustrated in FIG. 11, in the acoustic system 1B, among the audio signals S1 and S2 of two channels output from the sound source 90, the audio signal S1 (first playback signal) is subjected to signal processing by the acoustic device 11B, and then played back by a speaker 2a (first speaker). The audio signal S2 (second playback signal) is subjected to signal processing by the acoustic device 11B, and then played back by a speaker 2b (second speaker).

The playback sound (first playback sound) played back by the speaker 2a is mainly detected by a microphone 3a (first microphone) installed in proximity to the speaker 2a. The playback sound (second playback sound) played back by the speaker 2b is mainly detected by a microphone 3b (second microphone) installed in proximity to the speaker 2b. A detection sound signal (first detection sound signal) indicating the detection sound detected by the microphone 3a and a detection sound signal (second detection sound signal) indicating the detection sound detected by the microphone 3b are input to the acoustic device 11B.

In the acoustic system 1B, two playback sounds played back by the respective speakers 2a and 2b are listened to in the playback area 100 (common playback area) set in front of the two speakers 2a and 2b at locations in proximity to the two speakers 2a and 2b. In the non-playback areas 200a and 200b located outside the playback area 100, the two playback sounds are prevented from being perceived. Therefore, the acoustic device 11B adjusts the levels of the audio signals S1 and S2 of two channels output from the sound source 90, using the detection sound signals detected by the microphones 3a and 3b.

Here, it is assumed that frequency characteristics of the playback sound and the background noise at a representative point 201a (first representative point) in the non-playback area 200a and a representative point 201b (second representative point) in the non-playback area 200b are as illustrated in FIG. 2. In this case, persons present at the representative point 201a and the representative point 201b perceive the playback sounds of the frequency components equal to or greater than the frequency f1 because they are greater in level than the background noise. On the other hand, the playback sounds having frequency components equal to or less than the frequency f1 are not perceived because they are smaller in level than the background noise, and are masked by the background noise.

Therefore, as illustrated in FIG. 3, similarly to the acoustic devices 11 and 11A, the acoustic device 11B performs signal processing of reducing the levels of frequency components equal to or greater than the frequency f1 in the two audio signals S1 and S2. Due to this, at the representative point 201a and the representative point 201b, the levels of the playback sound played back by the speakers 2a and 2b no longer exceed the level of the background noise, and the playback sound is no longer perceived by the persons present at the representative point 201a and the representative point 201b.

When the signal processing is performed in the acoustic device 11B, the level of the frequency component equal to or greater than the frequency f1 of the playback sound listened to by the person present in the playback area 100 also decreases. However, since the playback area 100 is closer to the speaker 2a than the representative point 201a and is closer to the speaker 2b than the representative point 201b, before the signal processing is performed, for example, as illustrated in FIG. 4, the level of the playback sound is sufficiently greater than the level of the background noise. Therefore, as illustrated in FIG. 5, also after the signal processing is performed, the playback sound in the playback area 100 is perceived by a person present in the playback area 100 without being lost in the background noise.

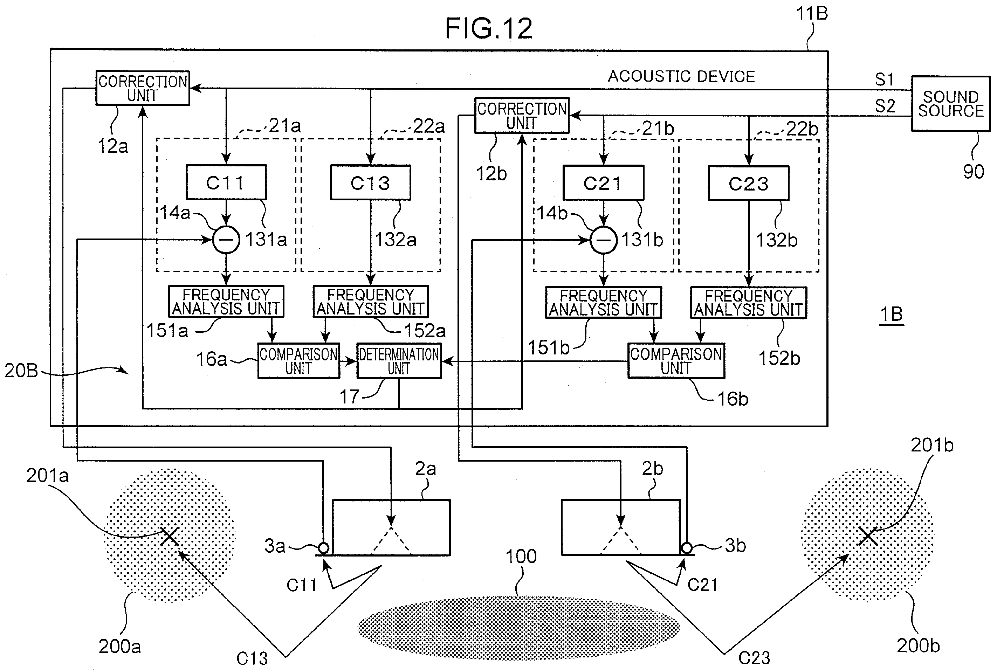

The signal processing described above performed in the acoustic device 11B will be described in more detail with reference to FIG. 12. FIG. 12 is a view illustrating an example of a detailed configuration of the acoustic system 1B according to another modification of the first embodiment.

As illustrated in FIG. 12, in the acoustic system 1B, the acoustic device 11B functions as two first generation units 21a and 21b, two second generation units 22a and 22b, and an adjustment unit 20B. The first generation unit 21a includes a transfer characteristic correction unit 131a and a subtraction unit 14a, and the first generation unit 21b includes a transfer characteristic correction unit 131b and a subtraction unit 14b. The second generation unit 22a includes a transfer characteristic correction unit 132a, and the second generation unit 22b includes a transfer characteristic correction unit 132b. The adjustment unit 20B includes two correction units 12a and 12b, four frequency analysis units 151a, 152a, 151b, and 152b, two comparison units 16a and 16b, and a determination unit 17.

The audio signals S1 and S2 of two channels output after being adjusted to levels corresponding to the volume set by the listener in the sound source 90 are input to the adjustment unit 20B. In the adjustment unit 20B, the correction unit 12a adjusts the audio signal S1, which is one of the audio signals S1 and S2 of two channels having been input, to a level (e.g., 0 dB) in accordance with a predetermined initial value similarly to the correction unit 12 (FIG. 6), and causes the speaker 2a to play back the audio signal S1 after adjustment. The microphone 3a detects sound in which the playback sound played back by the speaker 2a and background noise N around the microphone 3a are mixed, and outputs, to the subtraction unit 14a, a detection sound signal indicating the detection sound having been detected.

The audio signal S1 is also input to the first generation unit 21a. Similarly to the first generation unit 21 (FIG. 6), the first generation unit 21a generates a background-noise signal (first background-noise signal) indicating the ambient sound around the microphone 3a based on the audio signal S1 having been input, the detection sound signal indicating the detection sound detected by the microphone 3a, and the transfer characteristic C11 (first first characteristic) of the voice signal from the speaker 2a to the microphone 3a. The first generation unit 21a outputs the generated background-noise signal to the frequency analysis unit 151a.

Specifically, in the first generation unit 21a, similarly to the transfer characteristic correction unit 131 (FIG. 6), the transfer characteristic correction unit 131a generates, as the playback sound signal indicating the playback sound listened to at the installation location of the microphone 3a, the signal after performing the convolution processing on the audio signal S1 using the coefficient "C11" approximating the transfer characteristic C11. The subtraction unit 14a generates, as a background-noise signal indicating background noise around the microphone 3a, a signal in which the playback sound signal generated by the transfer characteristic correction unit 131a is subtracted from the detection sound signal indicating the detection sound detected by the microphone 3a.

The audio signal S1 is also input to the second generation unit 22a. Similarly to the second generation unit 22 (FIG. 6), the second generation unit 22a generates a leakage sound signal (first leakage sound signal) indicating the playback sound listened to at the representative point 201a based on the audio signal S1 having been input and the transfer characteristic C13 (first second characteristic) of the voice signal from the speaker 2a to the representative point 201a. The second generation unit 22a outputs the generated leakage sound signal to the frequency analysis unit 152a.

Specifically, in the second generation unit 22a, similarly to the transfer characteristic correction unit 132 (FIG. 6), the transfer characteristic correction unit 132a generates, as a leakage sound signal indicating the playback sound listened to at the representative point 201a, a signal after performing the convolution processing on the audio signal S1 using the coefficient "C13" approximating the transfer characteristic C13.

On the other hand, the audio signal S2, which is one of the audio signals S1 and S2 of two channels having been input, is input to the correction unit 12b, the first generation unit 21b, and the second generation unit 22b.

Similarly to the correction unit 12a, the correction unit 12b adjusts the audio signal S2 to a level (e.g., 0 dB) in accordance with a predetermined initial value, and causes the speaker 2b to play back the audio signal S2 after adjustment. The microphone 3b detects sound in which the playback sound played back by the speaker 2b and background noise N around the microphone 3b are mixed, and outputs, to the subtraction unit 14b, a detection sound signal indicating the detection sound having been detected.

Similarly to the first generation unit 21a, the first generation unit 21b generates a background-noise signal (second background-noise signal) indicating the ambient sound around the microphone 3b based on the audio signal S2 having been input, the detection sound signal indicating the detection sound detected by the microphone 3b, and a transfer characteristic C21 (second first characteristic) of the voice signal from the speaker 2b to the microphone 3b. The first generation unit 21b outputs the generated background-noise signal to the frequency analysis unit 151b.

Specifically, in the first generation unit 21b, similarly to the transfer characteristic correction unit 131a, the transfer characteristic correction unit 131b generates, as the playback sound signal indicating the playback sound listened to at the installation location of the microphone 3b, the signal after performing the convolution processing on the audio signal S2 using the coefficient "C21" approximating the transfer characteristic C21. The subtraction unit 14b generates, as a background-noise signal indicating background noise around the microphone 3b, a signal in which the playback sound signal generated by the transfer characteristic correction unit 131b is subtracted from the detection sound signal indicating the detection sound detected by the microphone 3b.

Similarly to the second generation unit 22a, the second generation unit 22b generates a leakage sound signal (second leakage sound signal) indicating the playback sound listened to at the representative point 201b based on the audio signal S2 having been input and a transfer characteristic C23 (second second characteristic) of the voice signal from the speaker 2b to the representative point 201b. The second generation unit 22b outputs the generated leakage sound signal to the frequency analysis unit 152b.

Specifically, in the second generation unit 22b, similarly to the transfer characteristic correction unit 132a, the transfer characteristic correction unit 132b generates, as a leakage sound signal indicating the playback sound listened to at the representative point 201b, a signal after performing the convolution processing on the audio signal S2 using the coefficient "C23" approximating the transfer characteristic C23.

The adjustment unit 20B adjusts the levels of the two audio signals S1 and S2 so that the level of the leakage sound signal generated by the second generation unit 22a is smaller than the level of the background-noise signal generated by the first generation unit 21a and the level of the leakage sound signal generated by the second generation unit 22b is smaller than the level of the background-noise signal generated by the first generation unit 21b. The adjustment unit 20B causes the speaker 2a to play back the audio signal S1 after adjustment, and causes the speaker 2b to play back the audio signal S2 after adjustment.

Specifically, in the adjustment unit 20B, similarly to the frequency analysis unit 151 (FIG. 6), the frequency analysis unit 151a calculates the level of each frequency component of the background-noise signal generated by the first generation unit 21a. Similarly to the frequency analysis unit 152 (FIG. 6), the frequency analysis unit 152a calculates the level of each frequency component of the leakage sound signal generated by the second generation unit 22a.

The comparison unit 16a compares the level of each frequency component of the background-noise signal calculated by the frequency analysis unit 151a with the level of each frequency component of the leakage sound signal calculated by the frequency analysis unit 152a, and outputs, to the determination unit 17, as a comparison result, a magnitude relationship and a difference between the level of each frequency component of the background-noise signal and the level of each frequency component of the leakage sound signal.

Similarly to the frequency analysis unit 151a, the frequency analysis unit 151b calculates the level of each frequency component of the background-noise signal generated by the first generation unit 21b. Similarly to the frequency analysis unit 152a, the frequency analysis unit 152b calculates the level of each frequency component of the leakage sound signal generated by the second generation unit 22b.

The comparison unit 16b compares the level of each frequency component of the background-noise signal calculated by the frequency analysis unit 151b with the level of each frequency component of the leakage sound signal calculated by the frequency analysis unit 152b. The comparison unit 16b outputs, to the determination unit 17, as a comparison result, the magnitude relationship and the difference between the level of each frequency component of the background-noise signal and the level of each frequency component of the leakage sound signal.

With reference to the comparison result input from the comparison unit 16a, the determination unit 17 specifies a frequency component (hereinafter, first frequency component) greater in level than the background-noise signal (hereinafter, first background-noise signal) generated by the first generation unit 21a in the leakage sound signal (hereinafter, first leakage sound signal) generated by the second generation unit 22a.

Similarly to this, with reference to the comparison result input from the comparison unit 16b, the determination unit 17 specifies a frequency component (hereinafter, second frequency component) greater in level than the background-noise signal (hereinafter, second background-noise signal) generated by the first generation unit 21b in the leakage sound signal (hereinafter, second leakage sound signal) generated by the second generation unit 22b.

The determination unit 17 outputs, to the correction unit 12a and the correction unit 12b, information indicating the first frequency component and the second frequency component having been specified, the difference between the level of the first frequency component in the first background-noise signal input from the comparison unit 16a and the level of the first frequency component in the first leakage sound signal, and the difference between the level of the second frequency component in the second background-noise signal input from the comparison unit 16b and the level of the second frequency component in the second leakage sound signal.

With reference to the information input from the determination unit 17, the correction unit 12a attenuates the level of the frequency component (hereinafter, third frequency component) corresponding to the first frequency component or the second frequency component in the audio signal S1 by equal to or greater than a larger difference between the difference between the level of the third frequency component in the first leakage sound signal and the level of the third frequency component in the first background-noise signal and the difference between the level of the third frequency component in the second leakage sound signal and the level of the third frequency component in the second background-noise signal.

Similarly to the correction unit 12a, with reference to the information input from the determination unit 17, the correction unit 12b attenuates the level of the third frequency component in the audio signal S2 by equal to or greater than a larger difference between the difference between the level of the third frequency component in the first leakage sound signal and the level of the third frequency component in the first background-noise signal and the difference between the level of the third frequency component in the second leakage sound signal and the level of the third frequency component in the second background-noise signal. Note that the correction unit 12b attenuates the level of the third frequency component in the audio signal S2 by the same amount as the amount by which the correction unit 12a attenuates the level of the third frequency component in the audio signal S1.

For example, it is assumed that the first frequency component is a frequency component of the frequency "f1", and the difference between the level of the frequency component of the frequency "f1" in the first leakage sound signal and the level of the frequency component of the frequency "f1" in the first background-noise signal is a level "L11". On the other hand, it is assumed that the difference between the level of the frequency component of the frequency "f1" in the second leakage sound signal and the level of the frequency component of the frequency "f1" in the second background-noise signal is a level "L12" smaller than the level "L11".

It is assumed that the second frequency component is a frequency component of a frequency "f2", and the difference between the level of the frequency component of the frequency "f2" in the first leakage sound signal and the level of the frequency component of the frequency "f2" in the first background-noise signal is a level "L21". On the other hand, it is assumed that the difference between the level of the frequency component of the frequency "f2" in the second leakage sound signal and the level of the frequency component of the frequency "f2" in the second background-noise signal is a level "L22" larger than the level "L21".

In this case, the correction unit 12a sets the frequency component of the frequency "f1" in the audio signal S1 as the third frequency component, and attenuates the level of the frequency component of the frequency "f1" in the audio signal S1 by a level larger by a predetermined error level than the level "L111". On the other hand, the correction unit 12a sets the frequency component of the frequency "f2" in the audio signal S1 as the third frequency component, and attenuates the level of the frequency component of the frequency "f2" in the audio signal S1 by a level larger by the error level than the level "L22".

Similarly, the correction unit 12b sets the frequency component of the frequency "f1" in the audio signal S2 as the third frequency component, and attenuates the level of the frequency component of the frequency "f1" in the audio signal S2 by a level larger by the error level than the level "L11". The correction unit 12b sets the frequency component of the frequency "f2" in the audio signal S2 as the third frequency component, and attenuates the level of the frequency component of the frequency "f2" in the audio signal S2 by a level larger by the error level than the level "L22".

Alternatively, the correction unit 12a may attenuate the level of the frequency component of the frequency "f1" in the audio signal S1 by the level "L11" and attenuate the level of the frequency component of the frequency f2 by the level "L22" without using the error level. In line with this, the correction unit 12b may attenuate the level of the frequency component of the frequency "f1" in the audio signal S2 by the level "L11" and attenuate the level of the frequency component of the frequency f2 by the level "L22" without using the error level.

Hereinafter, effects obtained by the configuration of the present modification will be described. Similarly to the acoustic device 11 (FIG. 6), it is assumed that the comparison result by the comparison unit 16a is input to the correction unit 12a and the comparison result by the comparison unit 16b is input to the correction unit 12b. Then, it is assumed that the correction unit 12a adjusts the level of the audio signal S1 based on the comparison result input from the comparison unit 16a, and the correction unit 12b adjusts the level of the audio signal S2 based on the comparison result input from the comparison unit 16b. In this case, if the adjustment degree of the level of the audio signal S1 and the adjustment degree of the level of the audio signal S2 are different, there is a possibility that the listener cannot feel stereo playback of the two audio signals S1 and S2.

However, in the configuration of the present modification, based on the same information input from the determination unit 17, both the correction unit 12a and the correction unit 12b perform adjustment of attenuating the levels of the third frequency components in the two audio signals S1 and S2 by the same amount and equal to or greater than a larger difference between the difference between the level of the third frequency component in the first leakage sound signal and the level of the third frequency component in the first background-noise signal and the difference between the level of the third frequency component in the second leakage sound signal and the level of the third frequency component in the second background-noise signal. Therefore, the level of the playback sound is smaller than the level of the background noise in both the non-playback areas 200a and 200b. Moreover, since the adjustment degree of the audio signal S1 in the correction unit 12a is the same as the adjustment degree of the audio signal S2 in the correction unit 12b, the listener can feel stereo playback of the two audio signals S1 and S2 in the playback area 100.

Similarly to the acoustic device 11 (FIG. 6), the adjustment amounts of the levels of the audio signals S1 and S2 by the correction unit 12a and the correction unit 12b are calculated based on the levels of the leakage sound signals indicating the playback sounds listened to at the representative points of the non-playback areas 200a and 200b. Therefore, the configuration of the present modification can adjust the levels of the audio signals S1 and S2 at appropriate levels for the listener present in the playback area 100 without excessively attenuating the levels.

Note that the first generation unit 21a and the second generation unit 22a of the acoustic device 11B (FIG. 12) may be configured similarly to the first generation unit 21A and the second generation unit 22A of the acoustic device 11A (FIG. 10). Similarly, the first generation unit 21b and the second generation unit 22b of the acoustic device 11B (FIG. 12) may be configured similarly to the first generation unit 21A and the second generation unit 22A of the acoustic device 11A (FIG. 10). In these cases, it is possible to reduce the scale of the configuration and the calculation amount necessary for generation of the leakage sound signal.

### (Second Embodiment)

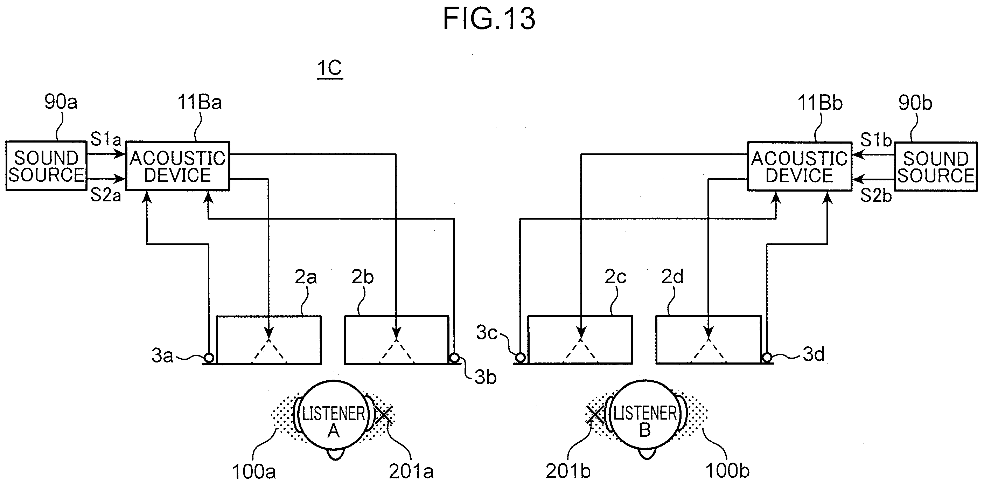

Next, an acoustic system 1C according to the second embodiment will be described. FIG. 13 is a view illustrating an example of the configuration of the acoustic system 1C according to the second embodiment. As illustrated in FIG. 13, the acoustic system 1C according to the second embodiment corresponds to a configuration in which two of the acoustic systems 1B (FIG. 11) described in the modification of the first embodiment are arranged in proximity to each other, and includes four speakers 2a to 2d, four microphones 3a to 3d, two acoustic devices 11Ba and 11Bb, and two sound sources 90a and 90b.

The acoustic system 1C according to the second embodiment is adopted, for example, in a case where the playback sound played back by a speaker installed in each of two seats in proximity to each other such as two adjacent seats as in a train, an airplane, and the like and a driver seat and a passenger seat of an automobile is listened to only in the playback area 100 set near the head of a seated person of each seat.

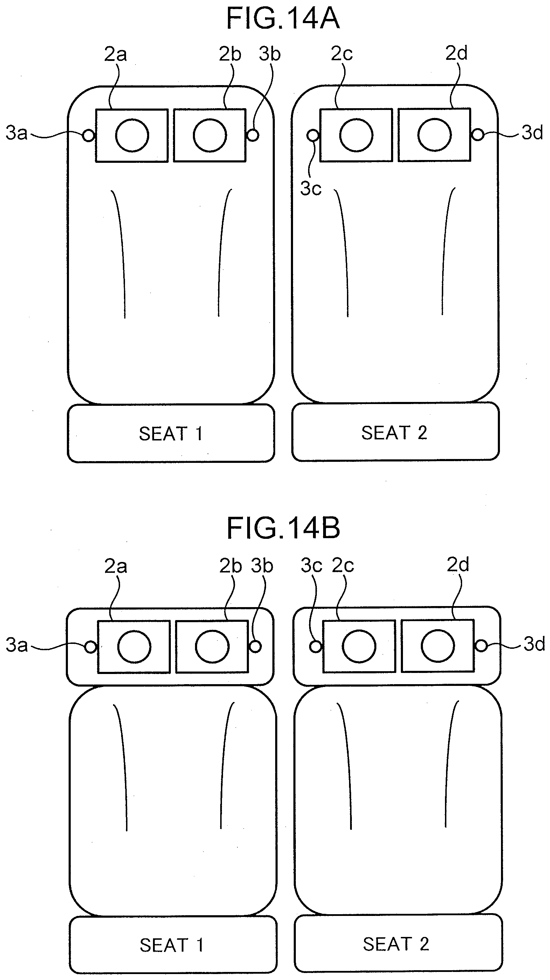

FIGS. 14A and 14B are views illustrating examples of installation locations of the four speakers 2a to 2d and the four microphones 3a to 3d included in the acoustic system 1C. FIG. 14A illustrates an example of installing the four speakers 2a to 2d in headrest portions of two seats in proximity to each other in which the seat back is integrated up to the headrest portion, which are adopted in seats of a train or the like. FIG. 14B illustrates an example of installing the four speakers 2a to 2d in headrest portions of two seats in proximity to each other in which the seat back is and the headrest portion are separated, which are adopted in a driver seat, a passenger seat, and the like of an automobile. As illustrated in FIGS. 14A and 14B, the four microphones 3a to 3d are installed on the side surface sides of the speakers 2a to 2d, respectively.

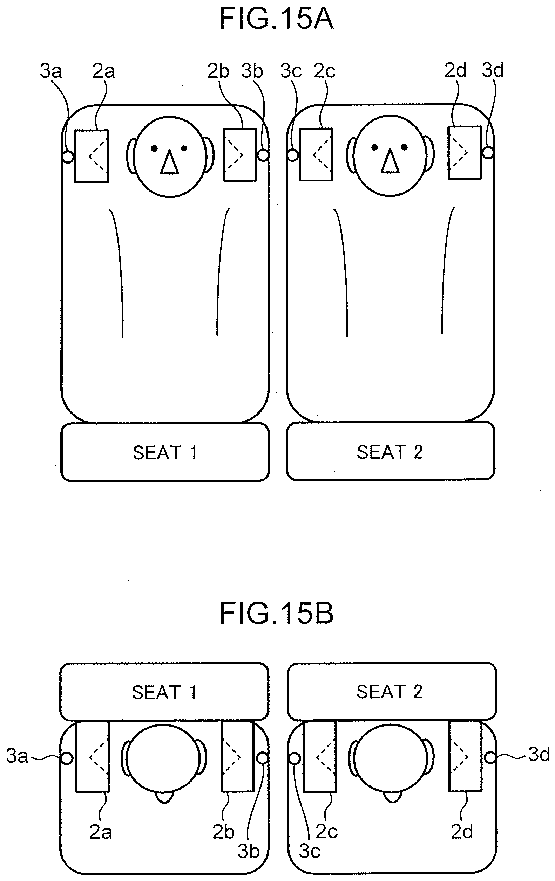

FIG. 15A is a front view illustrating another example of installation locations of the four speakers 2a to 2d and the four microphones 3a to 3d included in the acoustic system 1C, and FIG. 15B is a top view illustrating the other example. As illustrated in FIG. 15A, in a seat "seat 1" (first seat), the two speakers 2a and 2b are installed on the side surface sides of the seated person so as to sandwich the head of the seated person. In a seat "seat 2" (second seat), the two speakers 2c and 2d are installed on the side surface sides of the seated person so as to sandwich the head of the seated person. As illustrated in FIG. 15B, the four speakers 2a to 2d are attached so as to protrude from the headrest portion, and the diaphragms of the four speakers 2a to 2d face the ears of the seated person. As illustrated in FIGS. 15A and 15B, the four microphones 3a to 3d are installed on the back side of the speakers 2a to 2d, respectively.

Note that the installation locations of the four microphones 3a to 3d are not limited to the above installation locations, and may be locations in proximity to the speakers 2a to 2d, such as locations immediately beside the diaphragm in the front baffle of each of the speakers 2a to 2d.

The two seats in proximity to each other as described above are not limited to the seats of vehicles, and may be seats in movie theaters, seats in attractions in theme parks, and seats in offices. That is, it is sufficient that the plurality of seats where the speakers are installed in the headrest portions are arranged in proximity to each other.

As illustrated in FIG. 13, in the acoustic system 1C, audio signals S1a and S2a of two channels output from the sound source 90a are subjected to signal processing by the acoustic device 11Ba, and then played back by the speakers 2a and 2b. The audio signals S1b and S2b of two channels output from the sound source 90b are subjected to signal processing by the acoustic device 11Bb, and then played back by the speakers 2c and 2d.

The playback sound played back by the speaker 2a is mainly detected by the microphone 3a, and the playback sound (first playback sound) played back by the speaker 2b (first speaker) is mainly detected by the microphone 3b (first microphone). The playback sound (second playback sound) played back by the speaker 2c (second speaker) is mainly detected by the microphone 3c (second microphone), and the playback sound played back by the speaker 2d is mainly detected by the microphone 3d.

The detection sound signal indicating the detection sound detected by the microphones 3a and 3b is input to the acoustic device 11Ba, and the detection sound signal indicating the detection sound detected by the microphones 3c and 3d is input to the acoustic device 11Bb.

In the acoustic system 1C, two playback sounds played back by the respective speakers 2a and 2b are listened to in a playback area 100a (first playback area) set in front of the two speakers 2a and 2b installed in the seat "seat 1" (FIG. 14A and FIG. 14B or FIG. 15A and FIG. 15B) at locations in proximity to the two speakers 2a and 2b. Two playback sounds played back by the respective speakers 2c and 2d are listened to in a playback area 100b (second playback area) set in front of the two speakers 2c and 2d installed in the seat "seat 2" (FIG. 14A and FIG. 14B or FIG. 15A and FIG. 15B) in proximity to the seat "seat 1" at locations in proximity to the two speakers 2c and 2d.

However, it is problematic that the playback sound played back by the speakers 2c and 2d is listened to by a listener "listener A" who is present in the playback area 100a, the listener being a seated person on the seat "seat 1". It is problematic that the playback sound played back by the speakers 2a and 2b is listened to by a listener "listener B" who is present in the playback area 100b, the listener being a seated person on the seat "seat 2". That is, for each listener, the playback sound listened to by the seated person on the adjacent seat is an obstacle to the playback sound that the listener is listening to. Therefore, in the acoustic system 1C, the playback sounds leaking from the other playback areas 100a and 100b in proximity to the playback areas 100a and 100b where the respective listeners are present are prevented from being perceived.

Therefore, in the acoustic system 1C, the microphones 3a and 3b detect the playback sound played back by the speakers 2c and 2d, the playback sound leaking to the playback area 100a. The acoustic device 11Ba adjusts the levels of the audio signals S1a and S2a of two channels output from the sound source 90a, using the detection sound signals indicating the detection sounds detected by the microphones 3a and 3b. Similarly, the microphones 3c and 3d detect the playback sound played back by the speakers 2a and 2b, the playback sound leaking to the playback area 100b. The acoustic device 11Bb adjusts the levels of the audio signals S1b and S2b of two channels output from the sound source 90b, using the detection sound signals indicating the detection sounds detected by the microphones 3c and 3d.

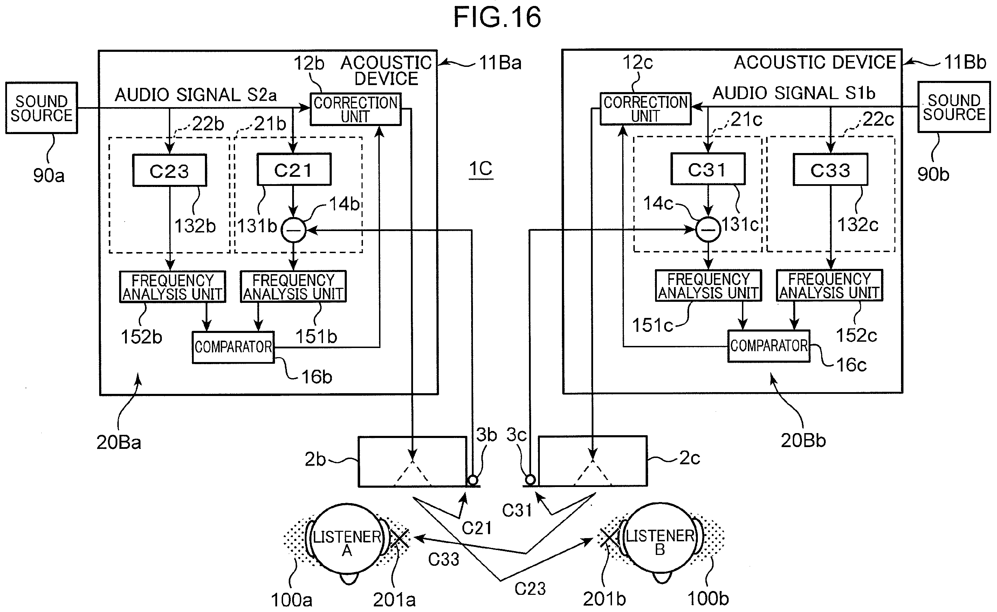

The signal processing performed in the acoustic devices 11Ba and 11Bb will be described in more detail with reference to FIG. 16. FIG. 16 is a view illustrating an example of a detailed configuration of the acoustic system 1C according to another modification of the second embodiment.

FIG. 16 extracts only the configuration related to two speakers 2b and 2c located between the listener "listener A" and the listener "listener B" in FIG. 13. These are constituent elements closest to the listener "listener A" and the listener "listener B" in the acoustic system 1C, and the two playback sounds played back by the two speakers have a larger influence on each listener than that in the configuration related to the other two speakers 2a and 2d. For this reason, only the configuration and the operation related to the two speakers 2b and 2c and the two microphones 3b and 3c will be described below in detail, and the description of the configuration and the operation related to the other two speakers 2a and 2d and the two microphones 3a and 3d will be omitted.

As illustrated in FIG. 16, the configuration related to the two speakers 2b and 2c corresponds to a configuration in which two configurations of the acoustic system 1 (FIG. 6) of the first embodiment are independently arranged.

The first generation unit 21b (the transfer characteristic correction unit 131b and the subtraction unit 14b), the second generation unit 22b (the transfer characteristic correction unit 132b), and an adjustment unit 20Ba (the frequency analysis unit 151b, the frequency analysis unit 152b, the comparison unit 16b, and the correction unit 12b) of the acoustic device 11Ba related to the speaker 2b operate similarly to the first generation unit 21 (the transfer characteristic correction unit 131 and the subtraction unit 14), the second generation unit 22 (the transfer characteristic correction unit 132), and the adjustment unit 20 (the frequency analysis unit 151, the frequency analysis unit 152, the comparison unit 16, and the correction unit 12), respectively, of the acoustic device 11 (FIG. 6).

A first generation unit 21c (a transfer characteristic correction unit 131c and a subtraction unit 14c), a second generation unit 22c (a transfer characteristic correction unit 132c), and an adjustment unit 20Bb (a frequency analysis unit 151c, a frequency analysis unit 152c, a comparison unit 16c, and a correction unit 12c) of the acoustic device 11Bb related to the speaker 2c also operate similarly to the first generation unit 21 (the transfer characteristic correction unit 131 and the subtraction unit 14), the second generation unit 22 (the transfer characteristic correction unit 132), and the adjustment unit 20 (the frequency analysis unit 151, the frequency analysis unit 152, the comparison unit 16, and the correction unit 12), respectively, of the acoustic device 11 (FIG. 6).

Note that the acoustic device 11Ba and the acoustic device 11Bb may be configured by an identical computer, or the acoustic device 11Ba and the acoustic device 11Bb may be configured by individual computers.

Specifically, the audio signal S2a (first playback signal) output after being adjusted to a level corresponding to the volume set by the listener "listener A" in the sound source 90a is input to the adjustment unit 20Ba. In the adjustment unit 20Ba, the correction unit 12b adjusts the audio signal S2a to a level (e.g., 0 dB) corresponding to a predetermined initial value, and causes the speaker 2b to play back the audio signal S2a after adjustment. The microphone 3b detects sound in which the playback sound played back by the speaker 2b and background noise N around the microphone 3b are mixed, and outputs, to the subtraction unit 14b, a detection sound signal (first detection sound signal) indicating the detection sound having been detected.

The audio signal S2a output from the sound source 90a is also input to the first generation unit 21b. The first generation unit 21b generates a background-noise signal (first background-noise signal) indicating the ambient sound around the microphone 3b based on the audio signal S2a having been input, a detection sound signal indicating the detection sound detected by the microphone 3b, and a transfer characteristic (first transfer characteristic) of the voice signal from the speaker 2b to the microphone 3b.

Specifically, in the first generation unit 21b, the transfer characteristic correction unit 131b performs, using a coefficient "C21", convolution processing on the audio signal S2a having been input, thereby generating a signal after the convolution processing as a playback sound signal indicating the playback sound listened to at the installation location of the microphone 3b. The transfer characteristic correction unit 131b outputs, to the subtraction unit 14b, the playback sound signal having been generated.

Here, the coefficient "C21" is a coefficient approximating a transfer characteristic of the voice signal from the speaker 2b to the microphone 3b. The coefficient "C21" is defined in advance based on the detection sound signal indicating detection sound detected by the microphone 3b, for example, in a case where the speaker 2b is caused to play back an experimental voice signal. Hereinafter, the coefficient "C21" may be described as a transfer characteristic C21 from the speaker 2b to the microphone 3b.

The subtraction unit 14b generates, as a background-noise signal indicating background noise around the microphone 3b, a signal in which the playback sound signal generated by the transfer characteristic correction unit 131b is subtracted from the detection sound signal indicating the detection sound detected by the microphone 3b.

Specifically, the detection sound signal indicating the detection sound detected by the microphone 3b can be expressed as "C21 · S2a + N", and the playback sound signal generated by the transfer characteristic correction unit 131b can be expressed as "C21 · S2a". Here, "S2a" indicates the audio signal S2a. "N" is a voice signal indicating the background noise N around the microphone 3b. The subtraction unit 14b generates, as a background-noise signal indicating background noise around the microphone 3b, a voice signal "N (= C21 · S2a + N - C21 · S)" in which the playback sound signal "C21 · S2a" is subtracted from the detection sound signal "C21 · S2a + N".

The audio signal S2a output from the sound source 90a is also input to the second generation unit 22b. The second generation unit 22b generates the leakage sound signal (first leakage sound signal) indicating the playback sound listened to at the representative point 201b based on the audio signal S2a having been input and the transfer characteristic (third transfer characteristic) of the voice signal from the speaker 2b to the representative point 201b (first representative point) located in the playback area 100b. The representative point 201b may be, for example, a location in the playback area 100b such as the location of the right ear of the listener "listener B" present in the playback area 100b where the playback sound played back by the speaker 2c is listened to.

Specifically, in the second generation unit 22b, the transfer characteristic correction unit 132b performs, using a coefficient "C23", convolution processing on the audio signal S2a having been input, thereby generating a voice signal "C23 · S2a" after the convolution processing as a leakage sound signal indicating the playback sound listened to at the representative point 201b.

Here, the coefficient "C23" is a coefficient approximating a transfer characteristic of the voice signal from the speaker 2b to the representative point 201b. The coefficient "C23" is defined in advance based on the detection sound signal indicating detection sound detected by a microphone installed at the representative point 201b, for example, in a case where the speaker 2b is caused to play back an experimental voice signal. Hereinafter, the coefficient "C23" may be described as a transfer characteristic C23 from the speaker 2 to the representative point 201b.

The adjustment unit 20Ba adjusts the level of the audio signal S2a so that the level of the leakage sound signal generated by the second generation unit 22b is smaller than the level of the background-noise signal generated by the first generation unit 21b. The adjustment unit 20Ba causes the speaker 2b to play back the audio signal S2a after adjustment.

Specifically, in the adjustment unit 20Ba, the frequency analysis unit 151b performs predetermined frequency analysis processing such as fast Fourier transform (FFT), thereby calculating the level of each frequency component of the background-noise signal generated by the first generation unit 21b. Similarly to the frequency analysis unit 151b, the frequency analysis unit 152b calculates the level of each frequency component of the leakage sound signal generated by the second generation unit 22b.

The comparison unit 16b compares the level of each frequency component of the background-noise signal calculated by the frequency analysis unit 151b with the level of each frequency component of the leakage sound signal calculated by the frequency analysis unit 152b, and outputs, to the correction unit 12b, as a comparison result, a magnitude relationship and a difference between the level of each frequency component of the background-noise signal and the level of each frequency component of the leakage sound signal.

Based on the comparison result input from the comparison unit 16b, the correction unit 12b adjusts the level of the audio signal S2a input from the sound source 90a so that the level of the leakage sound signal is smaller than the level of the background-noise signal. The correction unit 12b causes the speaker 2b to play back the audio signal S2a after adjustment.

Specifically, similarly to the correction unit 12 of the first embodiment, the correction unit 12b attenuates the level of the frequency component corresponding to the target frequency component in the audio signal S2a by equal to or greater than a difference between the level of the target frequency component greater in level than the background-noise signal in the leakage sound signal and the level of the frequency component corresponding to the target frequency component in the background-noise signal.

That is, since the adjustment unit 20Ba adjusts the audio signal S2a by comparing the leakage sound signal indicating not the playback sound having a great level detected by the microphone 3b but the playback sound listened to at the representative point 201b with the background-noise signal, the adjustment unit 20Ba can appropriately adjust the level of the audio signal S2a without excessively adjusting the level. This can cause the listener "listener A" listen to the playback sound played back by the speaker 2b in the playback area 100a. Moreover, by making the level of the playback sound listened to at the representative point 201b in the playback area 100b indicated by the leakage sound signal smaller than the level of the ambient sound around the microphone 3b indicated by the background-noise signal, it is also possible to the playback sound played back by the speaker 2b to be avoided from being perceived by the listener "listener B" present in the playback area 100b.

Note that in a case where the microphone 3c is installed in proximity to the speaker 2c and the representative point 201b, the transfer characteristic C23 may be a transfer characteristic of a voice signal from the speaker 2b to the microphone 3c. In this case, the coefficient "C23" used by the second generation unit 22b to generate the leakage sound signal can be defined using the microphone 3c without taking time and effort to move the installation location of the microphone 3c or time and effort to install a microphone other than the microphone 3c at the representative point 201b.

Similarly, the audio signal S1b (second playback signal) output after being adjusted to a level corresponding to the volume set by the listener "listener B" in the sound source 90b is input to the adjustment unit 20Bb. In the adjustment unit 20Bb, the correction unit 12c adjusts the audio signal S1b to a level (e.g., 0 dB) corresponding to a predetermined initial value, and causes the speaker 2c to play back the audio signal S1b after adjustment. The microphone 3c detects sound in which the playback sound played back by the speaker 2c and background noise N around the microphone 3c are mixed, and outputs, to the subtraction unit 14c, a detection sound signal (second detection sound signal) indicating the detection sound having been detected.

The audio signal S1b output from the sound source 90b is also input to the first generation unit 21c. The first generation unit 21c generates a background-noise signal (second background-noise signal) indicating the ambient sound around the microphone 3c based on the audio signal S1b having been input, the detection sound signal indicating the detection sound detected by the microphone 3c, and a transfer characteristic (second transfer characteristic) of the voice signal from the speaker 2c to the microphone 3c.

Specifically, in the first generation unit 21c, the transfer characteristic correction unit 131c performs, using a coefficient "C31", convolution processing on the audio signal S1b having been input, thereby generating a signal after the convolution processing as a playback sound signal indicating the playback sound listened to at the installation location of the microphone 3c. The transfer characteristic correction unit 131c outputs, to the subtraction unit 14c, the playback sound signal having been generated.

Here, the coefficient "C31" is a coefficient approximating a transfer characteristic of the voice signal from the speaker 2c to the microphone 3c. The coefficient "C31" is defined in advance based on the detection sound signal indicating detection sound detected by the microphone 3c, for example, in a case where the speaker 2c is caused to play back an experimental voice signal. Hereinafter, the coefficient "C31" may be described as a transfer characteristic C31 from the speaker 2c to the microphone 3c.

The subtraction unit 14c generates, as a background-noise signal indicating background noise around the microphone 3c, a signal in which the playback sound signal generated by the transfer characteristic correction unit 131c is subtracted from the detection sound signal indicating the detection sound detected by the microphone 3c.

Specifically, the detection sound signal indicating the detection sound detected by the microphone 3c can be expressed as "C31 · S1b + N", and the playback sound signal generated by the transfer characteristic correction unit 131c can be expressed as "C31 · S1b". Here, "S1b" indicates the audio signal S1b. "N" is a voice signal indicating the background noise N around the microphone 3c. The subtraction unit 14c generates, as a background-noise signal indicating background noise around the microphone 3c, a voice signal "N (= C31 · S1b + N - C31 · S1b)" in which the playback sound signal "C31 · S1b" is subtracted from the detection sound signal "C31 · S1b + N".

The audio signal S1b output from the sound source 90b is also input to the second generation unit 22c. The second generation unit 22c generates a leakage sound signal (second leakage sound signal) indicating the playback sound listened to at the representative point 201a based on the audio signal S1b having been input and a transfer characteristic (fourth transfer characteristic) of the voice signal from the speaker 2c to the representative point 201a (second representative point) located in the playback area 100a. The representative point 201a may be, for example, a location in the playback area 100a such as the location of the left ear of the listener "listener A" present in the playback area 100a where the playback sound played back by the speaker 2b is listened to.

Specifically, in the second generation unit 22c, the transfer characteristic correction unit 132c performs, using a coefficient "C33", convolution processing on the audio signal S1b having been input, thereby generating a voice signal "C33 · S1b" after the convolution processing as a leakage sound signal indicating the playback sound listened to at the representative point 201a.

Here, the coefficient "C33" is a coefficient approximating a transfer characteristic of the voice signal from the speaker 2c to the representative point 201a. The coefficient "C33" is defined in advance based on the detection sound signal indicating detection sound detected by a microphone installed at the representative point 201a, for example, in a case where the speaker 2c is caused to play back an experimental voice signal. Hereinafter, the coefficient "C33" may be described as a transfer characteristic C33 from the speaker 2c to the representative point 201a.

The adjustment unit 20Bb adjusts the level of the audio signal S1b so that the level of the leakage sound signal generated by the second generation unit 22c is smaller than the level of the background-noise signal generated by the first generation unit 21c. The adjustment unit 20Bb causes the speaker 2c to play back the audio signal S1b after adjustment.

Specifically, in the adjustment unit 20Bb, the frequency analysis unit 151c performs predetermined frequency analysis processing such as fast Fourier transform (FFT), thereby calculating the level of each frequency component of the background-noise signal generated by the first generation unit 21c. Similarly to the frequency analysis unit 151c, the frequency analysis unit 152c calculates the level of each frequency component of the leakage sound signal generated by the second generation unit 22c.

The comparison unit 16c compares the level of each frequency component of the background-noise signal calculated by the frequency analysis unit 151c with the level of each frequency component of the leakage sound signal calculated by the frequency analysis unit 152c, and outputs, to the correction unit 12c, as a comparison result, a magnitude relationship and a difference between the level of each frequency component of the background-noise signal and the level of each frequency component of the leakage sound signal.

Based on the comparison result input from the comparison unit 16c, the correction unit 12c adjusts the level of the audio signal S1b input from the sound source 90b so that the level of the leakage sound signal is smaller than the level of the background-noise signal. The correction unit 12c causes the speaker 2c to play back the audio signal S1b after adjustment.

Specifically, similarly to the correction unit 12 of the first embodiment, the correction unit 12c attenuates the level of the frequency component corresponding to the target frequency component in the audio signal S1b by equal to or greater than a difference between the level of the target frequency component greater in level than the background-noise signal in the leakage sound signal and the level of the frequency component corresponding to the target frequency component in the background-noise signal.

That is, since the adjustment unit 20Bb adjusts the audio signal S1b by comparing the leakage sound signal indicating not the playback sound having a great level detected by the microphone 3c but the playback sound listened to at the representative point 201a with the background-noise signal, the adjustment unit 20Bb can appropriately adjust the level of the audio signal S1b without excessively adjusting the level. This can cause the listener "listener B" listen to the playback sound played back by the speaker 2c in the playback area 100b. Moreover, by making the level of the playback sound listened to at the representative point 201a in the playback area 100a indicated by the leakage sound signal smaller than the level of the ambient sound around the microphone 3c indicated by the background-noise signal, it is also possible to the playback sound played back by the speaker 2c to be avoided from being perceived by the listener "listener A" present in the playback area 100a.

Note that in a case where the microphone 3b is installed in proximity to the speaker 2b and the representative point 201a, the transfer characteristic C33 may be a transfer characteristic of a voice signal from the speaker 2c to the microphone 3b. In this case, the coefficient "C33" used by the second generation unit 22c to generate the leakage sound signal can be defined using the microphone 3b without taking time and effort to move the installation location of the microphone 3b or time and effort to install a microphone other than the microphone 3b at the representative point 201a.

The flow of the signal processing described above performed in each of the acoustic device 11Ba and the acoustic device 11Bb is similar to that shown in FIG. 7, and thus detailed description will be omitted.

Note that the description of the second embodiment describes at the beginning that the acoustic system 1C corresponds to the configuration in which two of the acoustic systems 1B (FIG. 11) described in the modification of the first embodiment are arranged in proximity to each other. However, FIG. 16 excludes the determination unit 17 (FIG. 12) of each of the acoustic devices 11Ba and 11Bb from the configuration related to the two speakers 2b and 2c and the two microphones 3b and 3c.

Therefore, in reality, the acoustic device 11Ba needs not function as the determination unit 17 (FIG. 12), the correction unit 12a of the acoustic device 11Ba may adjust the level of the audio signal S1a based on the comparison result input from the comparison unit 16a, and the correction unit 12b may adjust the level of the audio signal S1b at an individual adjustment degree from the correction unit 12a based on the comparison result input from the comparison unit 16b. The same applies to the acoustic device 11Bb. However, the present configuration can avoid the playback sound to be listened by another listener from perceiving by the listener but there is a possibility of failing to cause the listener to feel stereo playback.

Therefore, it is preferable that each of the acoustic devices 11Ba and 11Bb performs the operation described in the modification of the first embodiment without excluding the determination unit 17 from each of the acoustic devices 11Ba and 11Bb. In this case, the determination unit 17 of the acoustic device 11Ba outputs, to the correction unit 12a and the correction unit 12b, information necessary for adjustment of the correction unit 12a and the correction unit 12b, based on the comparison results input from the comparison unit 16a and the comparison unit 16b. Due to this, the correction unit 12a and the correction unit 12b adjust the levels of the third frequency components of the audio signal S1a and the audio signal S2a by the same amount. The same applies to the acoustic device 11Bb.

The first generation unit 21b and the second generation unit 22b of the acoustic device 11Ba may be configured similarly to the first generation unit 21A and the second generation unit 22A of the acoustic device 11A (FIG. 10). Similarly, the first generation unit 21c and the second generation unit 22c of the acoustic device 11Bc may be configured similarly to the first generation unit 21A and the second generation unit 22A of the acoustic device 11A (FIG. 10). In these cases, it is possible to reduce the scale of the configuration and the calculation amount necessary for generation of the leakage sound signal.

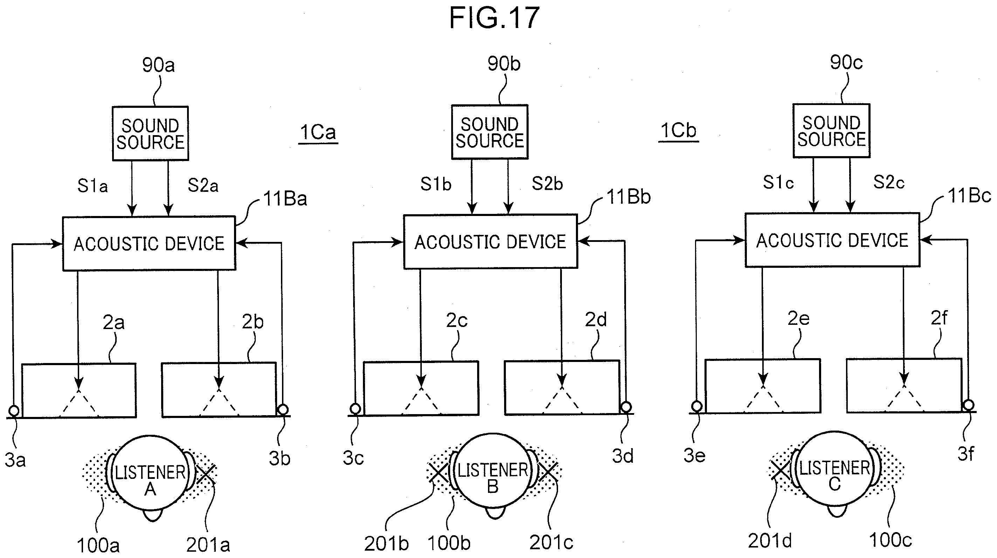

The acoustic system 1C of the second embodiment can also be applied to a case where the playback sound played back by the speaker installed in each of three or more seats arranged in proximity to each other, such as passenger seats of a train and an aircraft, are listened to only in a playback area set near the head of the seated person of each seat. For example, in a case where the playback sound played back by the speaker installed in each of three seats in proximity to each other are listened to only in a playback area set near the head of the seated person on each seat, two acoustic systems 1Ca and 1Cb may be configured as illustrated in FIG. 17. FIG. 17 is a view illustrating an example of a case where the acoustic system 1C according to the second embodiment is applied to three seats.

Since the relationship between the listener "listener A" and the listener "listener B" illustrated in FIG. 17 is the same as the relationship between the listener "listener A" and the listener "listener B" illustrated in FIG. 13, the operation of the acoustic system 1Ca may be similar to the operation of the acoustic system 1C described with reference to FIG. 16.

The relationship between the listener "listener B" and a listener "listener C" is also the same as the relationship between the listener "listener A" and the listener "listener B" illustrated in FIG. 13, and thus, the operation of the acoustic system 1Cb may be similar to the operation of the acoustic system 1C described with reference to FIG. 16.

That is, the listener "listener B" in FIG. 17 may be considered to correspond to the listener "listener A" in FIG. 16, and the listener "listener C" in FIG. 17 may be considered to correspond to the listener "listener B" in FIG. 16. A representative point 201c in the playback area 100b where the listener "listener B" is present in FIG. 17 may be considered to correspond to the representative point 201a of the listener "listener A" in FIG. 16. A representative point 201d in a playback area 100c where the listener "listener C" is present may be considered to correspond to the representative point 201b in the playback area 100b where the listener "listener B" is present in FIG. 16. Then, the operation of the acoustic system 1Cb may be similar to the operation of the acoustic system 1C described with reference to FIG. 16.

As described above, the configuration of the acoustic system 1B targeting one listener illustrated in FIG. 11 may be applied to the acoustic system 1C targeting two listeners as illustrated in FIG. 13. The configuration of the acoustic system 1B targeting one listener illustrated in FIG. 11 may be applied to a sound system targeting three or more listeners similarly to that applied to the sound systems 1Ca and 1Cb targeting three listeners as illustrated in FIG. 17.

The technique according to the present disclosure enables playback sound to be normally listened to in a playback area and playback sound leaking to the outside of the playback area to be avoided from being perceived without using a array speaker. Therefore, the technique according to the present disclosure is useful in allowing only a seated person of each seat to listen to playback sound played back by a speaker installed in each seat in a plurality of seats in proximity to each other such as passenger seats of a train and an aircraft.

## Claims

1. An acoustic device that adjusts playback sound played back by a speaker so that the playback sound is listened to in a predetermined playback area, the acoustic device comprising:
a first generation unit that generates a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone;
a second generation unit that generates a leakage sound signal indicating the playback sound listened to at a representative point located outside the playback area, based on the playback signal and a second characteristic that is a transfer characteristic of a voice signal from the speaker to the representative point; and
an adjustment unit that adjusts a level of the playback signal so that a level of the leakage sound signal is smaller than a level of the background-noise signal.

2. The acoustic device according to claim 1, wherein
the adjustment unit
calculates a difference level that is a difference between a level of a target frequency component, which is a frequency component greater in level than the background-noise signal in the leakage sound signal, and a level of a frequency component corresponding to the target frequency component in the background-noise signal, and attenuates, by equal to or greater than the difference level, a level of a frequency component corresponding to the target frequency component in the playback signal.

3. The acoustic device according to claim 1 or 2, wherein
the first generation unit
generates a playback sound signal indicating the playback sound listened to at an installation location of the microphone based on the playback signal and the first characteristic, and
generates, as the background-noise signal, a signal in which the playback sound signal is subtracted from the detection sound signal, and
the second generation unit
generates the leakage sound signal based on the playback sound signal and an approximation characteristic approximating a difference characteristic between the first characteristic and the second characteristic.

4. The acoustic device according to claim 3, wherein
the approximation characteristic indicates that a level of each of a plurality of frequency components in a voice signal is constant.

5. The acoustic device according to claim 3, wherein
the approximation characteristic indicates that a level of a frequency component lower than a predetermined reference frequency component in a voice signal is a first level that is constant, and a level of a frequency component higher than the reference frequency component in a voice signal is a second level that is constant and different from the first level.

6. An acoustic device that adjusts a first playback sound played back by a first speaker and a second playback sound played back by a second speaker so that the first playback sound is listened to in a predetermined first playback area and the second playback sound is listened to in a predetermined second playback area, wherein
the first speaker is installed in a first seat,
the second speaker is installed in a second seat in proximity to the first seat, and
the acoustic device includes
a first generation unit that generates a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone, and
generates a second background-noise signal indicating ambient sound around a second microphone installed in proximity to the second speaker, based on a second playback signal output from a sound source of the second playback sound, a second detection sound signal indicating a detection sound detected by the second microphone, and a second transfer characteristic that is a transfer characteristic of a voice signal from the second speaker to the second microphone,
a second generation unit that generates a first leakage sound signal indicating the first playback sound listened to at a first representative point located in the second playback area, based on the first playback signal and a third transfer characteristic that is a transfer characteristic of a voice signal from the first speaker to the first representative point, and
generates a second leakage sound signal indicating the second playback sound listened to at a second representative point located in the first playback area, based on the second playback signal and a fourth transfer characteristic that is a transfer characteristic of a voice signal from the second speaker to the second representative point, and
an adjustment unit that adjusts a level of the first playback signal so that a level of the first leakage sound signal is smaller than a level of the first background-noise signal, and
adjusts a level of the second playback signal so that a level of the second leakage sound signal is smaller than a level of the second background-noise signal.

7. The acoustic device according to claim 6, wherein
the adjustment unit
calculates a first difference level that is a difference between a level of a first frequency component, which is a frequency component greater in level than the first background-noise signal in the first leakage sound signal, and a level of a frequency component corresponding to the first frequency component in the first background-noise signal, and attenuates, by equal to or greater than the first difference level, a level of a frequency component corresponding to the first frequency component in the first playback signal, and
calculates a second difference level that is a difference between a level of a second frequency component, which is a frequency component greater in level than the second background-noise signal in the second leakage sound signal, and a level of a frequency component corresponding to the second frequency component in the second background-noise signal, and attenuates, by equal to or greater than the second difference level, a level of a frequency component corresponding to the second frequency component in the second playback signal.

8. The acoustic device according to claim 6 or 7, wherein
the first generation unit
generates a first playback sound signal indicating the first playback sound listened to at an installation location of the first microphone, based on the first playback signal and the first transfer characteristic,
generates, as the first background-noise signal, a signal in which the first playback sound signal is subtracted from the first detection sound signal,
generates a second playback sound signal indicating the second playback sound listened to at an installation location of the second microphone, based on the second playback signal and the second transfer characteristic,
generates, as the second background-noise signal, a signal in which the second playback sound signal is subtracted from the second detection sound signal, and
the second generation unit
generates the first leakage sound signal based on the first playback sound signal and a first approximation characteristic approximating a difference characteristic between the first transfer characteristic and the third transfer characteristic, and
generates the second leakage sound signal based on the second playback sound signal and a second approximation characteristic approximating a difference characteristic between the second transfer characteristic and the fourth transfer characteristic.

9. The acoustic device according to claim 8, wherein
the first approximation characteristic and the second approximation characteristic indicate that a level of each of a plurality of frequency components in a voice signal is constant.

10. The acoustic device according to claim 8, wherein
the first approximation characteristic and the second approximation characteristic indicate that a level of a frequency component lower than a predetermined reference frequency component in a voice signal is a first level that is constant, and a level of a frequency component higher than the reference frequency component in a voice signal is a second level that is constant and different from the first level.

11. The acoustic device according to claim 6, wherein
the first representative point is a location where the second microphone is installed, and
the second representative point is a location where the first microphone is installed.

12. The acoustic device according to claim 1, wherein
the speaker includes a first speaker and a second speaker installed in an identical seat,
the playback area includes a common playback area for listening to a first playback sound played back by the first speaker and a second playback sound played back by the second speaker,
the representative point includes a first representative point and a second representative point located outside the common playback area,
the microphone includes a first microphone installed in proximity to the first speaker and a second microphone installed in proximity to the second speaker,
the first characteristic includes a first first characteristic that is a transfer characteristic of a voice signal from the first speaker to the first microphone, and a second first characteristic that is a transfer characteristic of a voice signal from the second speaker to the second microphone,
the second characteristic includes a first second characteristic that is a transfer characteristic of a voice signal from the first speaker to the first representative point, and a second second characteristic that is a transfer characteristic of a voice signal from the second speaker to the second representative point,
the first generation unit
generates a first background-noise signal indicating ambient sound around the first microphone, based on a first playback signal output from a sound source of the first playback sound, a first detection sound signal indicating a detection sound detected by the first microphone, and the first first characteristic, and
generates a second background-noise signal indicating ambient sound around the second microphone, based on a second playback signal output from a sound source of the second playback sound, a second detection sound signal indicating a detection sound detected by the second microphone, and the second first characteristic,
the second generation unit
generates a first leakage sound signal indicating the first playback sound listened to at the first representative point, based on the first playback signal and the first second characteristic, and
generates a second leakage sound signal indicating the second playback sound listened to at the second representative point, based on the second playback signal and the second second characteristic, and
the adjustment unit
adjusts levels of the first playback signal and the second playback signal
so that a level of the first leakage sound signal is smaller than a level of the first background-noise signal, and a level of the second leakage sound signal is smaller than a level of the second background-noise signal.

13. The acoustic device according to claim 12, wherein
the adjustment unit
specifies a first frequency component that is a frequency component greater in level than the first background-noise signal in the first leakage sound signal,
specifies a second frequency component that is a frequency component greater in level than the second background-noise signal in the second leakage sound signal, and
attenuates a level of a third frequency component, which is a frequency component corresponding to the first frequency component or the second frequency component, in each of the first playback signal and the second playback signal, by equal to or greater than a larger difference between a difference between a level of the third frequency component in the first leakage sound signal and a level of the third frequency component in the first background-noise signal and a difference between a level of the third frequency component in the second leakage sound signal and a level of the third frequency component in the second background-noise signal.

14. A playback method in an acoustic device that adjusts playback sound played back by a speaker so that the playback sound is listened to in a predetermined playback area, the playback method comprising:
generating a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone;
generating a leakage sound signal indicating the playback sound listened to at a representative point located outside the playback area, based on the playback signal and a second characteristic that is a transfer characteristic of a voice signal from the speaker to the representative point; and
adjusting a level of the playback signal so that a level of the leakage sound signal is smaller than a level of the background-noise signal.

15. A program causing a computer of an acoustic device that adjusts playback sound played back by a speaker so that the playback sound is listened to in a predetermined playback area to execute processing, the program causing the computer to execute processing of
generating a background-noise signal indicating ambient sound around a microphone installed in proximity to the speaker, based on a playback signal output from a sound source of the playback sound, a detection sound signal indicating detection sound detected by the microphone, and a first characteristic that is a transfer characteristic of a voice signal from the speaker to the microphone,
generating a leakage sound signal indicating the playback sound listened to at a representative point located outside the playback area, based on the playback signal and a second characteristic that is a transfer characteristic of a voice signal from the speaker to the representative point, and
adjusting a level of the playback signal so that a level of the leakage sound signal is smaller than a level of the background-noise signal.

16. A playback method in an acoustic device that adjusts a first playback sound played back by a first speaker and a second playback sound played back by a second speaker so that the first playback sound is listened to in a predetermined first playback area and the second playback sound is listened to in a predetermined second playback area, wherein
the first speaker is installed in a first seat,
the second speaker is installed in a second seat in proximity to the first seat, and
the playback method includes
generating a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone,
generating a.second background-noise signal indicating ambient sound around a second microphone installed in proximity to the second speaker, based on a second playback signal output from a sound source of the second playback sound, a second detection sound signal indicating a detection sound detected by the second microphone, and a second transfer characteristic that is a transfer characteristic of a voice signal from the second speaker to the second microphone,
generating a first leakage sound signal indicating the first playback sound listened to at a first representative point located in the second playback area, based on the first playback signal and a third transfer characteristic that is a transfer characteristic of a voice signal from the first speaker to the first representative point,
generating a second leakage sound signal indicating the second playback sound listened to at a second representative point located in the first playback area, based on the second playback signal and a fourth transfer characteristic that is a transfer characteristic of a voice signal from the second speaker to the second representative point,
adjusting a level of the first playback signal so that a level of the first leakage sound signal is smaller than a level of the first background-noise signal, and
adjusting a level of the second playback signal so that a level of the second leakage sound signal is smaller than a level of the second background-noise signal.

17. A program causing a computer of an acoustic device that adjusts a first playback sound played back by a first speaker and a second playback sound played back by a second speaker so that the first playback sound is listened to in a predetermined first playback area and the second playback sound is listened to in a predetermined second playback area to execute processing, wherein
the first speaker is installed in a first seat,
the second speaker is installed in a second seat in proximity to the first seat, and
the program causing the computer to execute processing of
generating a first background-noise signal indicating ambient sound around a first microphone installed in proximity to the first speaker, based on a first playback signal output from a sound source of the first playback sound, a first detection sound signal indicating a detection sound detected by the first microphone, and a first transfer characteristic that is a transfer characteristic of a voice signal from the first speaker to the first microphone,
generating a second background-noise signal indicating ambient sound around a second microphone installed in proximity to the second speaker, based on a second playback signal output from a sound source of the second playback sound, a second detection sound signal indicating a detection sound detected by the second microphone, and a second transfer characteristic that is a transfer characteristic of a voice signal from the second speaker to the second microphone,
generating a first leakage sound signal indicating the first playback sound listened to at a first representative point located in the second playback area, based on the first playback signal and a third transfer characteristic that is a transfer characteristic of a voice signal from the first speaker to the first representative point,
generating a second leakage sound signal indicating the second playback sound listened to at a second representative point located in the first playback area, based on the second playback signal and a fourth transfer characteristic that is a transfer characteristic of a voice signal from the second speaker to the second representative point,
adjusting a level of the first playback signal so that a level of the first leakage sound signal is smaller than a level of the first background-noise signal, and
adjusting a level of the second playback signal so that a level of the second leakage sound signal is smaller than a level of the second background-noise signal.
